(19) **Europäisches Patentamt**

**European Patent Office**

**Office européen des brevets**

(11) **EP 0 925 762 B1**

(12) **EUROPÄISCHE PATENTSCHRIFT**

(45) Veröffentlichungstag und Bekanntmachung des Hinweises auf die Patenterteilung:
**15.01.2003 Patentblatt 2003/03**

(51) Int Cl.⁷: **A61C 1/14**, A61C 3/02, B23B 31/107, A61B 17/16

(21) Anmeldenummer: **99105669.8**

(22) Anmeldetag: **15.07.1994**

(54) **Werkzeug für ein winkelförmiges oder gerades Handstück mit einer lösbaren Spannvorrichtung für das Werkzeug, insbesondere für medizinische Zwecke**

Tool for an angled or straight hand-piece with a releasable chuck device for the tool, in particular for medical purposes

Outil pour une pièce à main contre-angle ou droite avec dispositif de serrage détachable pour l'outil, en particulier pour des fins médicales

(84) Benannte Vertragsstaaten:
**AT CH DE FR IT LI**

(30) Priorität: **30.07.1993 DE 4325665**
**14.03.1994 DE 4408574**

(43) Veröffentlichungstag der Anmeldung:
**30.06.1999 Patentblatt 1999/26**

(62) Dokumentnummer(n) der früheren Anmeldung(en) nach Art. 76 EPÜ:
**94111062.9 / 0 642 770**

(73) Patentinhaber: **KALTENBACH & VOIGT GmbH & Co.**
**88400 Biberach/Riss (DE)**

(72) Erfinder: **Logé, Hans**
**88400 Biberach (DE)**

(74) Vertreter: **Schmidt-Evers, Jürgen, Dipl.-Ing. et al**
**Patentanwälte Mitscherlich & Partner,**
**Sonnenstrasse 33**
**80331 München (DE)**

(56) Entgegenhaltungen:
EP-A- 0 305 357          DE-A- 3 442 386
US-A- 5 090 905          US-A- 5 222 956

**Beschreibung**

Die Erfindung bezieht sich auf ein Werkzeug für ein Handstück nach dem Oberbegriff des Anspruchs 1.

Bei einem solchen Handstück kann es sich unter anderem um ein ärztliches oder zahnärztliches Behandlungsinstrument oder um ein Handstück für ein medizinisches oder zahntechnisches Labor handeln.

Ärztliche oder zahnärztliche Behandlungsinstrumente unterscheiden sich unter anderem durch die Funktion des von ihnen jeweils getragenen Werkzeugs bzw. durch die Funktion des Antriebs. Es gibt Behandlungsinstrumente, deren Werkzeug für einen Behandlungsvorgang durch den vorhandenen Antrieb in Rotation versetzt wird, um unterschiedliche Funktionen auszuführen. Eine Funktion besteht in der spanabhebenden Abtragung von Zahnmaterialien, wie es z.B. beim Bohren, Fräsen oder Schleifen eines Zahnes der Fall ist.

Ein solches Behandlungsinstrument mit einem rotierend angetriebenen Werkzeug kann bei entsprechender Ausbildung des Werkzeugs auch dazu benutzt werden, eine Drehantriebskraft auf Drehteile zu übertragen, z.B. am Behandlungsort vorhandene Schrauben anzuziehen oder zu lösen. Für eine solche Funktion wird das Werkzeug normalerweise mit einer geringen Drehzahl angetrieben, z.B. 1 bis 3 min$^{-1}$. Dagegen wird bei einer spanabhebenden Bearbeitung das Werkzeug mit einer höheren Drehzahl angetrieben, wie z.B. bis 40.000 min$^{-1}$ und mehr.

Bei anderen Arten von ärztlichen und zahnärztlichen Behandlungsinstrumenten wird das Werkzeug axial hin und her bewegt, wie es z.B. bei Zahnfeilen oder bei Behandlungsinstrumenten für Wurzelkanäle der Fall ist. Es sind auch bereits Behandlungsinstrumente bekannt geworden, bei denen das Werkzeug sowohl in seiner Längsrichtung hin und her verschoben und gleichzeitig um seine Längsachse gedreht oder hin und her geschwenkt wird.

Bei der Benutzung eines ärztlichen oder zahnärztlichen Behandlungsinstruments ist das Behandlungswerkzeug häufig zu ersetzen oder auszutauschen, wenn es z.B. abgenutzt ist oder durch ein unterschiedliches Behandlungswerkzeug auszutauschen ist. Zur lösbaren Befestigung des Behandlungswerkzeugs im Behandlungsinstrument dienen zwei Kupplungen, nämlich eine Kupplung zur Drehmitnahmeverbindung des Schaftes in der Antriebshülse und eine Kupplung zur axialen Verbindung des Schaftes in der Antriebshülse. Jeweils eine der beiden Kupplungen dient dem Antrieb des Werkzeugs, während die andere Kupplung der Halterung des Werkzeugs in der Antriebshülse dient und eine unbeabsichtigte Entfernung aus der Antriebshülse verhindert. Bei einem unzureichend gehaltenen Werkzeugschaft in der Antriebshülse besteht die Gefahr, daß das Werkzeug sich während der Behandlung löst, was zu schwerwiegenden Folgen am Behandlungsort führen kann.

Da die Maßnahmen zum Lösen oder Spannen bzw. Austauschen eines Werkzeugs zum einen die Behandlung des Patienten unterbrechen und zum anderen die Aufmerksamkeit der behandelnden Person auf sich ziehen, sind bereits eine Vielzahl von Vorrichtungen entwickelt worden, die das Einspannen und Lösen des Behandlungswerkzeugs im Behandlungsinstrument vereinfachen sollen.

Bekannte Vorrichtungen weisen hierzu eine durch eine Abflachung des Schaftes gebildete Ausnehmung im Schaft auf, der ein Kupplungszapfen in der den Schaft aufnehmenden Antriebshülse zugeordnet ist. Um eine möglichst spielfreie Befestigung des Schaftes in der Antriebshülse zu erreichen, ist eine ziemlich genaue Passung zwischen dem Grund der Kupplungsausnehmung und der am Grund anliegenden Stirnfläche des Kupplungszapfens erforderlich. Eine solche anzustrebende genaue Passung erschwert jedoch das Einführen des Kupplungszapfens in die Antriebshülse, weil nur in der genauen Paßstellung ein Einführen möglich ist. Vorrichtungen mit einer solchen Kupplung zur Drehmitnahmeverbindung des Schaftes in der Antriebshülse sind für drehangetriebene Behandlungswerkzeuge beschrieben in DE-A-28 22 708, DE-B-30 12 152, DE-A-30 12 240, DE-B-30 40 537 und DE-A-34 42 386.

In der DE-A-28 22 708 ist ein zahnärztliches Behandlungsinstrument in Form eines Winkelkopfes beschrieben, das neben der vorbeschriebenen Kupplung zur Drehmitnahmeverbindung des Schaftes in der Antriebshülse eine von letzterer unabhängige Kupplung zur axialen Verbindung des Schaftes in der Antriebshülse aufweist. Die letztere Kupplung weist zwei einander radial gegenüberliegende walzenförmige Kupplungszapfen auf, die jeweils in einer Ausnehmung der Antriebshülse gelagert sind, durch eine Feder radial einwärts vorgespannt sind und zur Kupplung des Werkzeugs in eine Umfangsnut in dessen Schaft einrasten. Dabei ist durch die Umfangsnut gewährleistet, daß das Werkzeug in jeder Drehposition eingeschoben werden kann, wobei die Kupplungszapfen radial nach außen verdrängt werden und selbsttätig in die Umfangsnut in ihre Kupplungsstellung einfedern. Zum Lösen des Werkzeugs ist ein Dorn von der dem Werkzeug abgewandten Seite her durch ein Loch in das Gehäuse einsteckbar, mit dem das Werkzeug ausgeschoben werden kann, wobei die Kupplungszapfen aus der Umfangsnut radial nach außen entgegen der auf sie wirkenden Federkraft verdrängt werden.

In der DE-A-34 42 386 ist ein zahnärztlichen Behandlungsinstruments mit einem sogenannten Winkelkopf beschrieben, bei dem das Behandlungswerkzeug in Form eines Bohrers ebenfalls drehbar gelagert ist. Das Behandlungswerkzeug ist durch eine lösbare Kupplung zur Drehmitnahmeverbindung in Form einer abgeflachten Ausnehmung am Schaft des Werkzeugs und einem in die Ausnehmung einfassenden Kupplungsvorsprung bzw. -zapfen in Umfangsrichtung fixiert und durch eine lösbare Kupplung zur axialen Verbindung mit der Antriebshülse in Form eines Rastgliedes fixiert, das durch eine Ringfeder radial einwärts in eine Umfangsnut des Schaftes vorgespannt ist und durch ein auf der dem Werkzeug abgewandten Seite des Winkelkopfes angeordnetes Druckglied aus der Umfangsnut radial nach außen herausziehbar ist, um das Werkzeug aus der Antriebshülse herausziehen zu können.

Eine Drehmitnahmefunktion zwischen dem Behandlungswerkzeug und einem ihm zugeordneten Antrieb besteht sowohl bei solchen Behandlungsinstrumenten, bei denen das Behandlungswerkzeug rotierend angetrieben ist, als auch bei solchen Behandlungsinstrumenten, bei denen das Behandlungswerkzeug in seiner Längsrichtung und ggf. auch gleichzeitig in Umfangsrichtung durch den Antrieb hin und her verschoben wird.

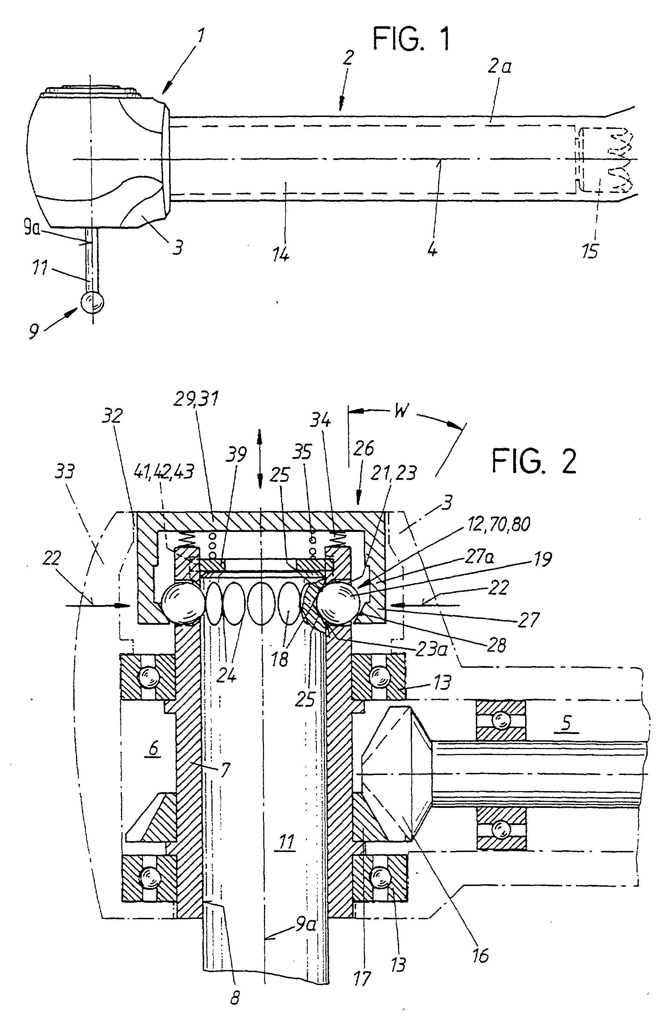

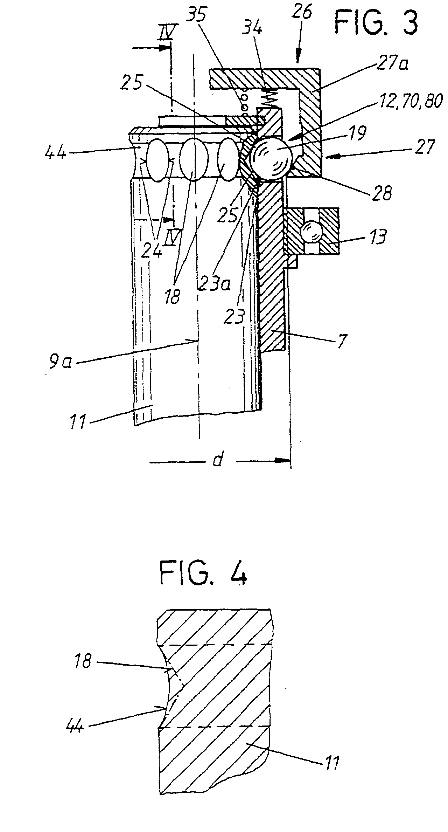

In der WO 90/00885 ist ein Behandlungsinstrument in Form eines Winkelkopfes mit einem Behandlungswerkzeug beschrieben, das ausschließlich in seiner Längsrichtung hin und her verschoben wird, wobei es sich bei dem Behandlungswerkzeug um eine Zahnfeile handelt, deren Schaft entweder mittels einer axial hin und her verschiebbaren Antriebshülse (Fig. 2) oder unmittelbar im Winkelkopf (Fig. 4) gelagert ist. Im zuerst genannten Fall ist eine lösbare Kupplung zur axialen Verbindung des Werkzeugschaftes mit der Antriebshülse durch eine im einzelnen nicht dargestellte Klemmverbindung geschaffen. Einer lösbaren Kupplung zur Drehmitnahmeverbindung zwischen dem Schaft und der Antriebshülse bedarf es nicht, weil die Antriebshülse nicht gedreht wird.

Bei diesem bekannten Behandlungsinstrument ist außerdem eine Winkelposition-Einstellvorrichtung zwischen dem Behandlungswerkzeug und der Antriebshülse vorgesehen, die durch einen am Schaft angeordneten und radial sowie axial vorspringenden Kupplungszapfen gebildet ist, der jeweils in eine von mehreren, an der Stirnseite der Antriebshülse auf den Umfang verteilt angeordneten Kupplungsausnehmungen beim Einstecken des Werkzeugs axial einschiebbar ist. Eine solche Winkelposition-Einstellvorrichtung ist insbesondere bei solchen Behandlungswerkzeugen wichtig, bei denen das Werkzeug einen unrunden, insbesondere blattförmigen, Querschnitt aufweist, wie es bei einer Zahnfeile der Fall ist.

Zwischen der Antriebshülse und dem Winkelkopfgehäuse ist außerdem eine Drehverhinderungskupplung wirksam, die durch eine Längsführung zwischen der Antriebshülse und dem Winkelkopfgehäuse in Form eines von letztem radial einwärts vorspringendem Kupplungszapfen gebildet ist, der in eine am Außenumfang der Antriebshülse angeordnete Längsnut einfaßt.

Des weiteren ist bei diesem bekannten Behandlungsinstrument dem Behandlungswerkzeug eine Überdrehkupplung zugeordnet, die dann die Drehverhinderung des Werkzeugs aufhebt, wenn an dem Werkzeug ein Drehmoment wirkt, das einen vorbestimmten Wert übersteigt. Diese Überdrehkupplung ist dadurch gebildet, daß die den Kupplungszapfen am Gehäuse aufnehmende Längsnut in einem Flansch der Antriebshülse (Fig. 1) oder des Werkzeugschaftes (Fig. 4) angeordnet ist, der aus einem so weichen Material gefertigt ist, daß diese Kupplung bei der Wirkung eines überhöhten Drehmoments am Werkzeug durchgedreht werden kann, was offenbar mit einer Quetschung und Beschädigung des Materials des Flansches verbunden ist.

In der DE-A-42 18 683 ist ein zahnärztliches Behandlungsinstrument mit einem in seiner Längsrichtung verschiebbaren Behandlungswerkzeug beschrieben, bei dem zwischen dem Gehäuse und der Antriebshülse eine Drehverhinderungskupplung, eine Überdrehkupplung und eine Winkelposition-Einstellvorrichtung vorgesehen sind, wobei außerdem zwischen der Antriebshülse und dem Werkzeugschaft eine lösbare Kupplung zur Dreh- Mitnahmeverbindung des Schaftes in der Antriebshülse und eine lösbare Kupplung zur axialen Verbindung des Schaftes in der Antriebshülse vorgesehen sind, die durch eine Klemmverbindung zwischen dem Schaft und der Antriebshülse gebildet sind. Bei dieser bekannten Ausgestaltung sind die Überdrehkupplung und die Winkelposition-Einstellvorrichtung durch zwei miteinander kämmende, zwischen der Antriebshülse und dem Gehäuse angeordnete Zahnteile gebildet, von denen ein Zahnteil in der Axialrichtung des Werkzeugs aus der Zahnverbindung heraus gedrückt werden kann, um die Überdrehkupplung zu lösen oder eine bestimmte Winkelposition einzustellen. In der eingerückten Stellung der Zahnteile ist die Drehverhinderungskupplung wirksam.

Aus der EP 0 305 357 ist ein Behandlungsinstrument für ein endodontisches Feilwerkzeug bekannt, dessen Schaft mit seinem freien Endbereich durch eine lösbare Kupplung gehalten ist, die durch mehrere auf den Umfang verteilte Kalotten in der Mantelfläche des Schaftes und zwei Kupplungskugeln gebildet ist, die in radialen Bohrungen eines Werkzeughalters sitzen und in der Kupplungsstellung in die Kalotten einfassen, jedoch handelt es sich hierbei um gattungsfremdes Behandlungsinstrument, dessen Feilwerkzeug sowohl gegen rotierende als auch gegen axiale Bewegung gesichert ist. Zur Halterung des Feilwerkzeugs ist ein buchsenförmiger festsitzender Werkzeughalter vorgesehen, in dessen Buchsenwänden die Bohrungen mit den Kupplungskugeln angeordnet sind. Außerdem ist die Anordnung so getroffen, daß in der Kupplungsstellung die Kupplungskugeln ohne Vorspannung in die Kalotten einfassen und außerdem zwischen den Kupplungskugeln und den Kalotten ein geringes Spiel vorhanden sein muß, damit das Feilenwerkzeug radial gerichtete Vibrationsbewegungen ausführen kann. Zur Halterung der Kupplungskugeln in ihren Kupplungsstellungen dient eine zylindrische Spannhülse, die zum Kuppeln und Lösen längs verschiebbar ist, und deren zylindrische Innenmantelfläche die Kupplungskugeln radial nach außen begrenzt.

Allen vorbeschriebenen bekannten Ausgestaltungen ist der Nachteil gemeinsam, daß das Einsetzen und Befestigen des Werkzeugs mit einem beträchtlichen Handhabungsaufwand verbunden ist, der eine große Aufmerksamkeit des Behandlers erfordert. Dies ist dadurch vorgegeben, daß das Werkzeug in einer solchen Position in das Behandlungsinstrument eingesteckt werden muß, in der die Drehstellung der zugehörigen Kupplungsausnehmung mit dem Kupplungszapfen übereinstimmt. Selbst wenn zu diesem Zweck Kennzeichnungen vorhanden sein würden, die diese bestimmte Stellung des Behandlungswerkzeugs markieren, ist der Handhabungsaufwand und die Aufmerksamkeit vorgegeben, weil zunächst auf die Kennzeichnung und dann auch noch auf das Einsetzen des Behandlungswerkzeugs zu achten ist.

In allen bekannten Fällen wird selbst dann, wenn ein Kennzeichnung vorhanden sein sollte, der Werkzeugschaft zunächst in das Behandlungsinstrument eingesteckt, dann mehr oder weniger gedreht, bis die Stellungen der Kupplungsausnehmung und des Kupplungszapfens übereinstimmen, und dann weiter in die Kupplungsstellung eingeschoben.

Beim Vorhandensein mehrerer, auf den Umfang verteilt angeordneter Kupplungsmöglichkeiten einer Winkelposition-Einstellvorrichtung, wie sie in der WO 90/00885 beschrieben ist, sind der erforderliche Handhabungsaufwand und die erforderliche Aufmerksamkeit zwar geringer, jedoch ebenfalls vorhanden.

Ein vorliegendes Handstück wird auch vorzugsweise in gerader Ausführung für ein medizinisches, insbesondere dentales Labor verwendet, in dem insbesondere künstliche Körperteile oder Modelle spanabhebend mittels in das Handstück einspannbarer Werkzeuge drehender Funktion bearbeitet werden. Das Handstück eignet sich zur Übertragung einer verhältnismäßig großen Arbeitsleistung auf das Werkzeug und es lassen sich unterschiedliche Werkzeuge handhabungsfreundlich und schnell spannen bzw. lösen und austauschen. Ein Handstück der vorliegenden Art wird von der Anmelderin unter der Bezeichnung K9-Handstück Type 950 auf dem Markt vertrieben und ist somit bekannt. Bei diesem Handstück beruht die Einspannung des Werkzeugs sowohl in Axial- als auch in Umfangsrichtung auf der Klemmspannung einer geschlitzten Konus-Spannhülse.

Der Erfindung liegt die Aufgabe zugrunde, ein Werkzeug der eingangs angegebenen Art so auszugestalten, daß bei Gewährleistung eines geringen Handhabungsaufwandes eine sichere Werkzeugeinspannung und/oder -halterung und/oder -positionierung erreicht wird.

Diese Aufgabe wird durch die Merkmale des Anspruches 1 gelöst.

Die erfindungsgemäße Lösung weist den Vorteil auf, daß nur eine gemeinsame lösbare Kupplung sowohl zur Drehmitnahmeverbindung als auch zur axialen Mitnahmeverbindung vorgesehen zu werden braucht, wobei der radial bewegliche Kupplungszapfen selbsttätig in die Kupplungsausnehmung des Werkzeugs einrastet und gegen dessen Schaft elastisch drückt, so daß eine feste und sichere Werkzeugeinspannung erreicht wird. Dabei ist die Anordnung so getroffen, daß der durch die Federkraft vorzugsweise radial nach innen vorgespannte Kupplungszapfen durch den eingeschobenen Werkzeugschaft radial nach außen gedrückt wird und selbsttätig in die Kupplungsausnehmung einrastet, sofern diese in Flucht mit dem Kupplungszapfen liegt. Das Werkzeug ist aber auch dann handhabungsfreundlich einsetzbar, wenn der Schaft in einer solchen in Umfangsrichtung verdrehten Stellung bis in seine Einschubendstellung eingeschoben wird, in der die Stellung der Kupplungsausnehmung nicht mit der Stellung des Kupplungszapfens übereinstimmt. Es bedarf in diesem Fall lediglich einer Drehung des Werkzeugs bis der Kupplungszapfen in die Kupplungsausnehmung selbsttätig einrastet. Ein axiales Weiterschieben des Werkzeugs, wie es beim Stand der Technik dann der Fall ist, wenn die Kupplungsausnehmung mit dem Kupplungszapfen nicht übereinstimmt, ist bei der erfindungsgemäßen Ausgestaltung nicht erforderlich.

Zur radialen Einführung des Kupplungszapfens in die Kupplungsausnehmung kann auch ein vorzugsweise ringförmiges Steuerelement mit einer bezüglich der Spannachse divergenten Steuerkontur bzw. -fläche vorgesehen sein, das insbesondere elastisch durch eine Feder verschiebbar ist und den Kupplungszapfen in die Kupplungsausnehmung drückt.

Bei Überlastungen des Werkzeugs wird dieses selbsttätig außer Funktion gesetzt wird, wobei weder am Werkzeug noch an der zugehörigen Kupplung Beschädigungen zu befürchten sind. Entsprechend sind die vorhandenen Kupplungs-Federkräfte und Steuerungsflächen oder -kanten zu bemessen bzw. auszubilden. Ferner ist von Bedeutung, daß eine erfindungsgemäße Kupplung mit einer Kupplungsausnehmung im Schaft des Werkzeugs und einem darin nachgiebig einfassenden Kupplungszapfen alle erfindungsgemäßen Kupplungen zugleich zu bilden vermag und deshalb zu einer wesentlichen Verringerung des Bau- und Herstellungsaufwandes und auch des erforderlichen Bauraumes führt.

Im Rahmen der Erfindung ist der Begriff Kupplungszapfen sehr weit zu verstehen, da viele Ausgestaltungsformen funktionsfähig sind. Es handelt sich um ein in Richtung auf die Kupplungsausnehmung konvexes, z.B. stiftförmiges Kupplungselement, das somit in die Kupplungsausnehmung einführbar ist.

Das radiale Ausrücken des Kupplungszapfens in seine Kupplungsbereitschaftsstellung beim Einschieben des Werkzeugschaftes läßt sich dadurch erreichen, daß der Kupplungszapfen an der Seite, an der der Werkzeugschaft kontaktiert, mit einer Anlaufschräge oder einer Rundung versehen wird, durch die beim Auftreffen des Werkzeugschaftes der Kupplungszapfen radial nach außen gedrückt wird.

Zum Lösen der Kupplung können bei der Erfindung verschiedene Ausgestaltungen vorgesehen sein. Es kann ein Mechanismus, z.B. ein Hebelmechanismus vorgesehen sein, der den vorzugsweise radial beweglichen Kupplungszapfen aus der Kupplungsausnehmung befördert. Es ist auch möglich, die Vorspannung des Kupplungszapfens zu verringern oder aufzuheben, z.B. dadurch, daß die Abstützung für eine Kupplungsfeder radial entfernt wird.

Dabei ist es weiter von Vorteil, den Kupplungszapfen an seinem der Kupplungsausnehmung zugewandten Ende in der Axialrichtung des Werkzeugs und/oder in Umfangsrichtung keilförmig oder gerundet insbesondere halbkugelförmig auszubilden. Hierdurch werden mehrere Vorteile erreicht. Zum einen rastet der Kupplungszapfen besser in die Kupplungsausnehmung ein. Zum anderen ist es möglich, den Kupplungszapfen mit einem gewissen Kraftaufwand durch Drehen des Werkzeugs aus der Kupplungsausnehmung zu verdrängen und somit die Kupplung zu lösen. Des weiteren ermöglicht eine solche Ausgestaltung eine selbsttätige Zentrierung des Werkzeugs in der Kupplungsstellung, wodurch die Befestigung weiter vereinfacht wird.

Es ist grundsätzlich zu bemerken, daß für eine erfindungsgemäße Kupplung zur Drehmitnahmeverbindung und zur axialen Mitnahmeverbindung des Schaftes in der Antriebshülse für eine befriedigende Funktion zwei die Kupplungsausnehmung in Umfangsrichtung begrenzende Flanken oder Kanten und eine Flanke oder Kante ausreichen, die die Kupplungsausnehmung auf der Seite begrenzt, die der Einschubrichtung des Werkzeugs abgewandt ist. In eine solche zweiseitig begrenzte Kupplungsausnehmung vermag der Kupplungszapfen sicher einzurasten, wenn ein die Einschubbewegung begrenzender Anschlag in der Antriebshülse vorgesehen ist, der in der Stellung wirksam ist, in der der Kupplungszapfen die zuletzt beschriebene Flanke oder Kante direkt hintergreift. Eine solche Ausgestaltung erfüllt somit nicht nur den Zweck der Drehmitnahme, sondern auch eine Sicherung gegen unbeabsichtigtes Herausfallen oder Herausziehen des Werkzeugs. Es ist besonders vorteilhaft, die Kupplungsausnehmung durch eine von einer insbesondere runden Flanke oder Kante allseitig zu begrenzen, insbesondere durch eine runde Ausnehmung, vorzugsweise eine Kalotte zu bilden.

Durch die erfindungsgemäße Ausgestaltung wird jeweils gleichzeitig auch eine Überlastkupplung gebildet, die ein selbsttätiges Entkuppeln gestattet, wenn am Werkzeug ein aktives oder passives Drehmoment und/oder eine axiale Zug- oder Schubkraft wirkt, das bzw. die jeweils größer ist als ein vorgegebener Wert, der z.B. durch die Elastizitätsgrenze des Werkzeugs und/oder einer Belastungsgrenze für den zu behandelnden Körper bestimmt ist. Die Überlastkupplung löst selbsttätig die Antriebsverbindung mit dem Werkzeug, so daß das Werkzeug durchdrehen oder längs verschoben werden kann, ohne daß sich ein schädlicher Belastungswert einstellt. Eine solche Überlastkupplung ist bei einem drehangetriebenen Werkzeug z.B. dann von besonderem Vorteil, wenn mit dem Werkzeug eine Dreh- oder Schraubkraft übertragen wird, wie es z.B. bei einem Schraubwerkzeug der Fall ist. Bei einem axial verschiebbaren Werkzeug ist die Überlastkupplung insbesondere dann von Vorteil, wenn das Werkzeug einen unrunden Querschnitt aufweist. Bei solchen Werkzeugen besteht die Gefahr, daß mit dem Behandlungsinstrument und dem Werkzeug ein Drehmoment auf den zu behandelnden Körper, z.B. einen Zahn ausgeübt werden kann, der zu einer Beschädigung führen kann. Beim Vorhandensein einer solchen Überdrehkupplung ist das übertragbare Drehmoment auf einen unschädlichen Wert begrenzt.

Bei einem nur längs verschiebbaren Werkzeug kann eine in Längsrichtung wirksame Überlastkupplung verhindern, daß das Werkzeug über einen bestimmten Wert erhöhte Zug- oder Druckkräfte auf den zu behandelnden Körper ausübt. Hierdurch wird die Behandlungssicherheit wesentlich verbessert und gewährleistet.

Im Rahmen der Erfindung ist es vorteilhaft, mehrere auf den Umfang verteilt angeordnete Kupplungsausnehmungen und wenigstens einen oder mehrere Kupplungszapfen, insbesondere in der Anzahl der Kupplungsausnehmungen, vorzusehen. Hierdurch läßt sich nicht nur die Kupplungskraft bzw. Spannkraft vergrößern, sondern auch das Einführen und Einspannen des Werkzeugschaftes. Dabei ist es besonders vorteilhaft, die Kupplungsausnehmungen in einer solchen Anzahl und/oder Größe vorzusehen, daß von zwei in Umfangsrichtung einander benachbarten Kupplungsausnehmungen deren benachbarte Ausnehmungsränder dicht nebeneinander liegen oder in einer gemeinsamen Ausnehmungsrandkante münden. Hierdurch wird erreicht, daß der Werkzeugschaft in nahezu jede Einsteckposition selbsttätig bei gleichzeitiger seitlicher Schwenkung in eine der beiden benachbarten Kupplungsausnehmungen einrastet.

In dem Fall, in dem mehrere Kupplungsausnehmungen auf den Umfang verteilt angeordnet sind, bilden die erfindungsgemäßen Ausgestaltungen gleichzeitig auch eine Winkelposition-Einstellvorrichtung für das Werkzeug, die es ermöglicht, das Werkzeug in unterschiedlichen Winkelstellungen in der Antriebshülse einzuspannen. Dabei ist es auch möglich, das Werkzeug von einer zur anderen Winkelposition durch Überdrehen der Kupplung zu verstellen.

Die erfindungsgemäßen Lösungen eignen sich für Werkzeuge, die drehangetrieben werden, längsverschoben werden oder auch im Sinne einer Kombination dieser beiden Antriebsrichtungen angetrieben werden. Dabei beruhen die erfindungsgemäßen Lösungen nicht nur auf formschlüssig wirksamen Kupplungen, wie es beim Stand der Technik der Fall ist, sondern auf der Kombination formschlüssig und kraftschlüssig wirksamer Kupplungen, wobei der Formschluß durch den Eingriff des Kupplungszapfens in die Kupplungsausnehmung gegegeben ist und der Kraftanschluß durch die Vorspannung gegeben ist, mit der der Kupplungszapfen gegen die Kupplungsausnehmung gedrückt ist.

Das erfindungsgemäße Werkzeug kann insbesondere mit folgenden Handstücken benutzt werden, was zu vergleichbaren Vorteilen führt.

a) Winkelförmiges oder gerades Handstück mit einer lösbaren Spannvorrichtung für ein Werkzeug, insbesondere für medizinische Zwecke, mit

- einem Gehäuse,
- einer darin gelagerten Antriebshülse, in die ein Werkzeug mit seinem Schaft einsetzbar ist, und die durch einen Antrieb um ihre Mittelachse drehbar im Gehäuse gelagert ist,
- einer lösbaren Kupplung zur Drehmitnahmeverbindung des Schaftes in der Antriebshülse
- und einer lösbaren Kupplung zur axialen Verbindung des Schaftes mit der Antriebshülse,
- wobei die Kupplungen jeweils durch eine Kupplungsausnehmung im Schaft und einen darin einfassenden Kupplungszapfen an der Antriebshülse gebildet sind,

wobei beide Kupplungen durch wenigstens eine gemeinsame Kupplungsausnehmung gebildet sind und der gemeinsame Kupplungszapfen zwischen einer in die Kupplungsausnehmung einfassenden Kupplungsstellung und einer die Kupplungsausnehmung freigebenden Entkupplungsstellung beweglich gelagert und durch die Kraft einer Feder in seine Kupplungsstellung und gegen den Schaft vorgespannt ist.

b) Winkelförmiges oder gerades Handstück mit einer lösbaren Spannvorrichtung für ein Werkzeug, insbesondere für medizinische Zwecke, mit

- einem Gehäuse,
- einer darin gelagerten Antriebshülse, in die ein Werkzeug mit seinem Schaft einsetzbar ist, und die durch einen Antrieb um ihre Mittelachse drehbar im Gehäuse gelagert ist,
- einer lösbaren Kupplung zur Drehmitnahmeverbindung des Schaftes in der Antriebshülse,
- und einer lösbaren Kupplung zur axialen Verbindung des Schaftes mit der Antriebshülse,
- wobei die Kupplung zur Drehmitnahmeverbindung durch eine Kupplungsausnehmung im Schaft und einen darin einfassenden Kupplungszapfen an der Antriebshülse gebildet ist,

wobei der Kupplungszapfen zwischen einer in die Kupplungsausnehmung einfassenden Kupplungsstellung und einer die Kupplungsausnehmung freigebenden Entkupplungsstellung beweglich gelagert und durch die Kraft einer Feder in seine Kupplungsstellung und gegen den Schaft vorgespannt ist.

c) Winkelförmiges oder gerades Handstück mit einer lösbaren Spannvorrichtung für ein Werkzeug, insbesondere für medizinische Zwecke, mit

- einem Gehäuse
- einer darin gelagerten Antriebshülse, in die ein Werkzeug mit seinem Schaft einsetzbar ist und die durch einen Antrieb in der Längsrichtung ihrer Mittelachse hin und her verschiebbar und ggf. auch um ihre Mittelachse hin und her schwenkbar im Gehäuse gelagert ist,
- einer lösbaren Kupplung zur Verbindung des Schaftes in der Antriebshülse in seiner axialen Richtung,
- und einer lösbaren Kupplung zur Verbindung des Schaftes in der Antriebshülse in seiner Umfangsrichtung,

wobei die Kupplung zur Verbindung des Schaftes in seiner axialen Richtung und/oder die Kupplung zur Verbindung des Schaftes in seiner Umfangsrichtung jeweils durch eine Kupplungsausnehmung oder durch eine gemeinsame Kupplungsausnehmung im Schaft gebildet ist bzw. sind und der Kupplungszapfen zwischen einer in die Kupplungsausnehmung einfassenden Kupplungsstellung und einer die Kupplungsausnehmung freigebenden Entkupplungsstellung beweglich gelagert und durch die Kraft einer Feder in seine Kupplungsstellung und gegen den Schaft vorgespannt ist.

d) Winkelförmiges oder gerades Handstück mit einer lösbaren Spannvorrichtung für ein Werkzeug, insbesondere für medizinische Zwecke, mit

- einem Gehäuse,
- einer darin gelagerten Antriebshülse, in die ein Werkzeug mit seinem Schaft einsetzbar ist, und die durch einen Antrieb um ihre Mittelachse drehbar oder schwenkbar und/oder in der Längsrichtung ihrer Mittelachse hin und her verschiebbar gelagert ist,
- und einer lösbaren Überlastkupplung, die durch eine Kupplungsausnehmung im Schaft und einen darin einfassenden Kupplungszapfen an der Antriebshülse gebildet ist,

wobei der Kupplungszapfen zwischen einer in die Kupplungsausnehmung einfassenden Kupplungsstellung und einer die Kupplungsausnehmung freigebenden Kupplungsstellung in einer Führung beweglich gelagert und durch die Kraft einer Feder in seine Kupplungsstellung und vorzugsweise auch gegen den Schaft vorgespannt ist.

e) Winkelförmiges oder gerades Handstück mit einer lösbaren Spannvorrichtung für ein Werkzeug, insbesondere für medizinische Zwecke, mit

- einem Gehäuse,
- einer darin gelagerten Antriebshülse, in die ein Werkzeug mit seinem Schaft einsetzbar ist, und die durch einen Antrieb um ihre Mittelachse drehbar oder schwenkbar und/oder in der Längsrichtung ihrer Mittelachse hin und her verschiebbar gelagert ist,
- und einer lösbaren Dreh- oder Winkelposition-Einstellvorrichtung für das Werkzeug, die zwischen letzterem und der Antriebshülse wirksam ist,
- und die durch mehrere Kupplungsausnehmungen und einen Kupplungszapfen gebildet ist, der in eine wahlweise Kupplungsausnehmung eingreift,

wobei die Kupplungsausnehmungen im Schaft angeordnet sind und der Kupplungszapfen an der Antriebshülse angeordnet ist, wobei der Kupplungszapfen zwischen einer in die Kupplungsausnehmung einfassenden Kupplungsstellung und einer die Kupplungsausnehmung freigebenden Kupplungsstellung beweglich gelagert und durch die Kraft einer Feder in seine Kupplungsstellung und vorzugsweise auch gegen den Schaft vorgespannt ist.

f) Handstück nach einer der Ausgestaltungen a) bis e), wobei mehrere auf dem Umfang des Schaftes verteilt angeordnete Kupplungsausnehmungen vorgesehen sind.

g) Handstück nach einer der Ausgestaltungen a) bis f),
wobei die Kupplung zur Verbindung des Schaftes in seiner axialen Richtung und/oder in seiner Umfangsrichtung und/oder die Überlastkupplung und/oder die Winkelposition-Einstellvorrichtung durch eine oder mehrere gemeinsame Kupplungsausnehmungen gebildet ist bzw. sind, die vorzugsweise in ein- und derselben Querebene angeordnet sind.

h) Handstück nach einer der Ausgestaltungen a) bis g),
wobei der Kupplungszapfen an seinem Kupplungsende kugelförmig gerundet ist, vorzugsweise durch eine Kugel gebildet ist.

i) Handstück einer der Ausgestaltungen a) bis h),
wobei der Kupplungszapfen in einer radialen Führung, insbesondere einem radialen Führungsloch der Antriebshülse, gelagert ist.

j) Handstück nach einer der Ausgestaltungen a) bis i), wobei dem Kupplungszapfen ein Bewegungsanschlag zugeordnet ist, der verhindert, daß der Kupplungszapfen bei herausgezogenem Werkzeug aus seinem Halter, insbesondere aus der Antriebshülse, herausfällt.

k) Handstück nach einer der Ausgestaltungen i) oder j),
wobei das Führungsloch in seinem inneren Randbereich auf ein Maß verjüngt ist, das geringer bemessen ist als die Querschnittsabmessung des Kupplungszapfens.

l) Handstück nach einer der Ausgestaltungen a) bis k),
wobei die radiale Abmessung des größer bemessen ist als die radiale Dicke der Antriebshülse.

m) Handstück nach einer der Ausgestaltungen a) bis l),
wobei der Kupplungszapfen und die Antriebshülse von einem axial verschiebbar gelagerten, insbesondere durch einen Ring oder eine Hülse gebildeten Druckglied verstellbar sind, der mit einer inneren Schräg- oder Konusfläche gegen den Kupplungszapfen wirkt und durch die Kraft der Feder axial beaufschlagt ist.

n) Handstück nach Ausgestaltung m),
wobei das Druckglied von außerhalb des Gehäuses direkt manuell oder durch ein Betätigungselement zugänglich ist, insbesondere durch ein von der Seite oder von der werkzeugfernen Seite her zugängliches Betätigungselement verbunden ist, mit dem es gegen die Kraft der Feder in eine den Kupplungszapfen freigebende Freigabestellung verschiebbar ist.

o) Handstück nach einer der Ausgestaltungen a) bis n),
wobei es einen Winkelkopf aufweist und die Antriebshülse quer zur Längsmittelachse des Behandlungsinstruments im Winkelkopf gelagert ist

p) Handstück nach Ausgestaltung o),
wobei das Betätigungselement durch eine Drucktaste gebildet ist, die auf der werkzeugfernen Seite des Winkelkopfes in einer Führung des Winkelkopfgehäuses oder eines Deckelteils längs der Antriebshülse verschiebbar gelagert und durch eine Feder zur dem Werkzeug abgewandten Seite hin vorgespannt ist.

q) Handstück nach einer der Ausgestaltungen n) bis p),

wobei zwischen dem Betätigungselement und dem Druckglied in der Kupplungsstellung ein Abstand oder Spalt vorgesehen ist.

r) Handstück nach einer der Ausgestaltungen a) bis q),
wobei das Behandlungsinstrument sich im wesentlichen gerade erstreckt, die Antriebshülse vorne im Behandlungsinstrument im wesentlichen koaxial angeordnet ist und das Werkzeug von vorne in die Antriebshülse einschiebbar ist.

s) Handstück nach einer der Ausgestaltungen a) bis r),
wobei zum Lösen der vorzugsweise gemeinsamen Kupplung ein an der Mantelfläche des Behandlungsinstruments angeordnetes bewegliches Betätigungselement vorgesehen ist, das durch eine das Behandlungsinstrument durchsetzende Antriebsverbindung mit dem Druckglied in Antriebsverbindung steht.

t) Handstück nach einer der Ausgestaltungen a) bis s),
wobei das Betätigungselement parallel zur Mantelfläche bewegbar gelagert ist.

u) Handstück nach einer der Ausgestaltungen a) bis t),
wobei das Betätigungselement insbesondere um die Längsmittelachse des Behandlungsinstrument schwenkbar oder drehbar ist und in der Antriebsverbindung ein in Umfangsrichtung gerichtete Bewegung in eine axiale Bewegung umwandelndes Getriebe angeordnet ist und das Betätigungselement vorzugsweise durch einen Drehring oder eine Drehhülse gebildet ist.

v) Handstück nach einer der Ausgestaltungen a) bis u),
wobei das Getriebe wenigstens einen das des Behandlungsinstruments radial durchsetzenden Mitnehmerzapfen aufweist, der in einer in der Wandung des Gehäuses angeordneten, in Umfangsrichtung schräg verlaufenden Führungsnut verschiebbar angeordnet ist, die Wand des Gehäuse radial nach außen und radial nach innen überragt, mit seinem radialen äußeren Ende in einer Längsführung mit dem Betätigungselement in Antriebsverbindung steht und mit seinem radial inneren Ende in eine Umfangsnut des Druckglieds hineinragt.

w) Handstück nach einer der Ausgestaltungen a) bis v),
wobei der Kupplungszapfen durch gerundete und/oder abgeschrägte Flächen so ausgestaltet ist bzw. sind, daß beim Einschieben bzw. beim Herausziehen des Schaftes in die bzw. aus der Antriebshülse der Kupplungszapfen aus seiner Kupplungsstellung verdrängt wird.

x) Handstück nach einer der Ausgestaltungen a) bis w),
wobei die Kupplungsausnehmung nach außen divergent und/oder der Kupplungszapfen an seinem Kupplungsende konvergent ausgebildet ist bzw. sind.

y) Handstück nach einer der Ausgestaltungen a) bis x),
wobei acht Stück Kupplungszapfen vorgesehen sind.

In den Unteransprüchen sind Merkmale enthalten, die zur Problemlösung beitragen, die Handhabung sowohl zum Kuppeln als auch Entkuppeln weiter vereinfachen und zu einfachen Konstruktionen und kleinen Bauweisen führen, die sich vorteilhaft in ein gerades oder winkelförmiges Behandlungsinstrument bzw. Handstück intregieren lassen und außerdem zu einer kostengünstig herstellbaren Bauweise führen.

Nachfolgend werden die Erfindung und weitere durch sie erzielbare Vorteile anhand eines bevorzugten Ausführungsbeispiels und einer vereinfachten Zeichnung näher erläutert. Es zeigt:

Fig. 1 das vordere Ende bzw. Kopfende eines erfindungsgemäßen Handstücks in Form eines zahnärztlichen Behandlungsinstruments mit einem sogenannten Winkelkopf in der Seitenansicht;

Fig. 2 einen Längsschnitt durch das Kopfende in vergrößerter Darstellung;

Fig. 3 eine der Fig. 2 entsprechende Detailansicht in abgewandelter Ausgestaltung;

Fig. 4 den Teilschnitt IV-IV in Fig. 3;

Fig. 5 ein spanabhebendes Werkzeug für ein erfindungsgemäßes Handstück in der Seitenansicht entsprechend der Blickrichtung P1 in Fig. 6;

Fig. 6 den Schnitt VI-VI in Fig. 5;

Fig. 7 eine abgewandelte Ausgestaltung des Werkzeugschaftes in der Seitenansicht entsprechend der Blickrichtung P in Fig. 6;

Fig. 8 das vordere bzw. Kopfende eines erfindungsgemäßen Handstücks in Form eines zahnärztlichen Behandlungsinstruments in der Seitenansicht in abgewandelter Ausgestaltung;

Fig. 9 einen Längsschnitt durch das Kopfende des Behandlungsinstruments nach Fig. 8;

Fig. 10 eine Einzelheit des Behandlungsinstruments nach Fig. 8 in vergrößerter Schnittdarstellung;

Fig. 11 ein erfindungsgemäßes Handstück in gerader Erstreckung, insbesondere für ein medi-

Fig. 12 das Behandlungsinstrument nach Fig. 11 im axialen Schnitt;

Fig. 13 den Schnitt XIII-XIII in Fig. 12;

Fig. 14 eine Betätigungshülse des Behandlungsinstruments nach Fig. 12 im axialen Schnitt;

Fig. 15 eine Einzelheit des Behandlungsinstrument nach Fig. 12 in vergrößerter Darstellung;

Fig. 16 das vordere bzw. Kopfende eines erfindungsgemäßen Handstück in Form eines zahnärztlichen Behandlungsinstruments mit einem Winkelkopf als weiteres Ausführungsbeispiel in der Seitenansicht.

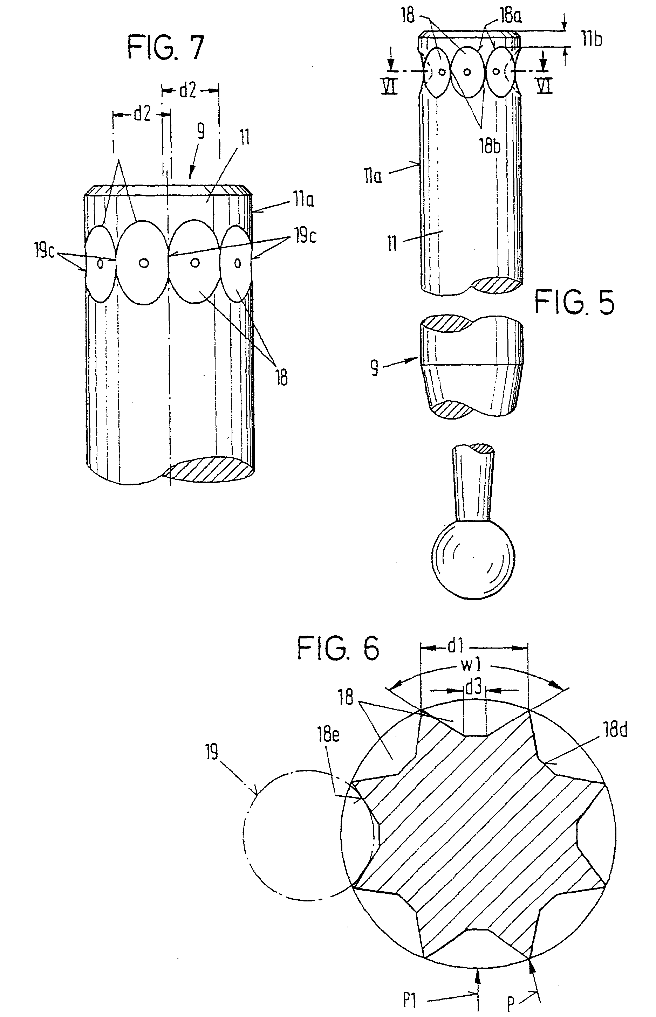

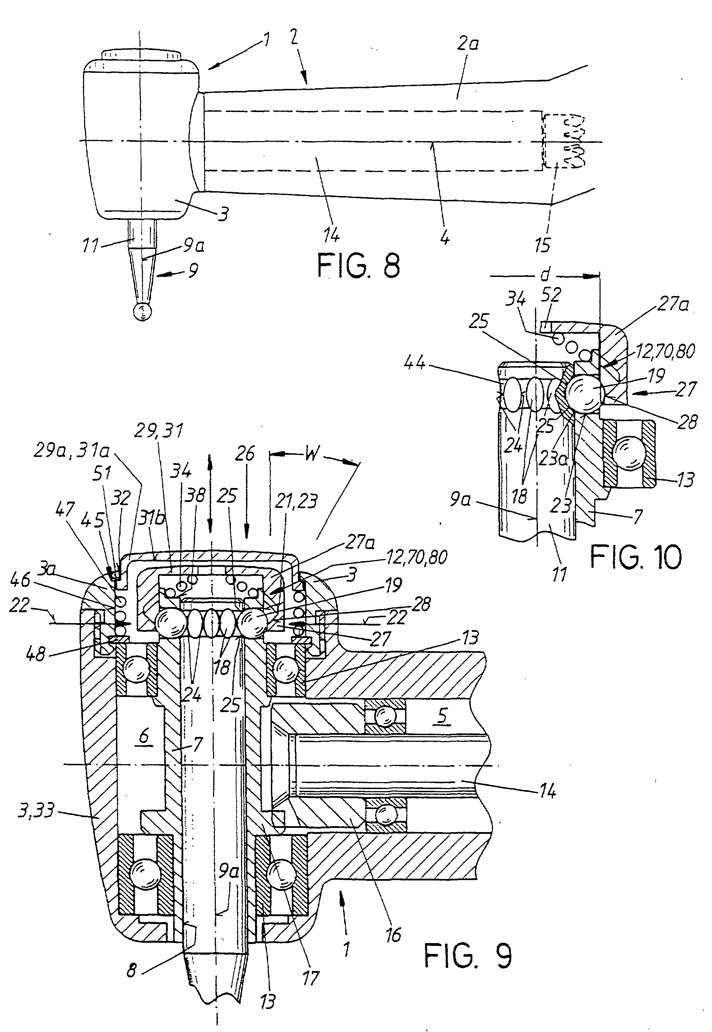

Beim vorliegenden Ausführungsbeispiel ist das vordere oder Kopfende 1 nur ein Teil eines Handstücks 2, das nur teilweise dargestellt ist. Das Kopfende 1 besteht aus einem Winkelkopfgehäuse 3, bei dem es sich um eine vordere Verlängerung einer Griffhülse 2a des Handstücks 2 handeln kann. Die Längsmittelachse der Griffhülse 2a ist mit 4 bezeichnet. Die noch zu beschreibende Erfindung läßt sich auch an einem geraden Handstück 2 realisieren, wie es in Fig. 7 und 8 dargestellt ist.

Wie insbesondere Fig. 2 zeigt, weist das Winkelkopfgehäuse 3 bzw. die Griffhülse 2 eine axiale Lagerbohrung 5 auf, die nach vorne in eine zu ihr rechtwinklig durchgehend verlaufende stufenförmige Lagerbohrung 6 mündet, in der eine im wesentlichen hohlzylindrische Antriebshülse 7 drehbar gelagert ist. In der zylindrischen Bohrung 8 der Antriebshülse 7 ist ein in Fig. 1 dargestelltes Bearbeitungswerkzeug 9 mit einem längs seiner Mittelachse 9a angeordneten zylindrischen Halteschaft 11 von der Werkzeugseite her einschiebbar und durch eine Kupplung 12 mit der Antriebshülse 7 kuppelbar. Bei der Ausgestaltung gemäß Fig. 2 handelt es sich um ein rotierend angetriebenes Bohrwerkzeug.

Zur Lagerung der Antriebshülse 7 sind zu beiden Seiten der Längsmittelachse 4 einen axialen Abstand voneinander aufweisende Lager 13 im Gehäuse 3 angeordnet, wobei es sich um Wälzlager handelt.

Für den Antrieb der Antriebshülse 7 ist ein Antriebswellenzug im Handstück 2 gelagert, dessen vorderster Antriebswellenabschnitt 14 in der Lagerbohrung 5 drehbar gelagert ist und durch eine an seinem hinteren Ende angeordnete Zahnkupplung oder einem Kegelrad 15 eines Kegelradgetriebes mit dem übrigen (nicht dargestellten) Antriebswellenzug in Antriebsverbindung steht. Für den Drehantrieb der Antriebshülse 7 ist am vorderen Ende des Antriebswellenabschnitts 14 ein Kegelrad 16 befestigt, das mit einem ringförmigen, auf der Antriebshülse 7 befestigten oder einteilig mit ihr ausgebildeten Kegelrad 17 kämmt.

Die Kupplung 12 dient zur Drehmitnahmeverbindung und zwar axialen Verbindung des Werkzeugschafts 11 in der Antriebshülse 7, und sie wird durch wenigstens eine Kupplungsausnehmung 18 in der Mantelfläche des Werkzeugschafts und einen der Antriebshülse 7 zugeordneten Kupplungsvorsprung bzw. -zapfen 19 gebildet, der in einer radialen Führung 21 in der Antriebshülse 7 zwischen einer Kupplungsstellung und einer Entkupplungsstellung beweglich gelagert und durch eine Federkraft 22 in seine Kupplungsstellung, d.h. in Richtung auf die Kupplungsausnehmung 18 vorgespannt ist.

Die Kupplungsausnehmung 18 hat eine hohlkegelförmige Querschnitt form, die vorzugsweise etwa rechtwinklig oder sturnpfwinlig ist, und der Kupplungszapfen 19 ist beim vorliegenden Ausführungsbeispiel durch eine Kugel gebildet, die in einer die Führung 21 bildenden radialen Bohrung 23 radial bewegbar ist. Der innere Randbereich der Bohrung 23 ist etwas verjüngt, um zu verhindern, daß die Kugel 19 bei entferntem Halteschaft 11 nach innen aus der Bohrung 23 herausfällt. Bei Anlage der Kugel 19 in der Kupplungsausnehmung 18 ist zwischen der Kugel 19 und der Verjüngung 23a ein kleiner Abstand vorhanden.

Die Kupplungsausnehmung 18 bildet mit ihren axial oder in Umfangsrichtung einander gegenüberliegenden Kanten oder Flanken jeweils ein Kupplungselementenpaar 24 oder 25, zwischen denen der Kupplungszapfen 19 einfaßt. Durch das in Umfangsrichtung voneinander beabstandete Kupplungselementenpaar 24 ist die Drehmitnahme geschaffen, während durch das in Längsrichtung des Werkzeugschafts 11 beabstandete Kupplungselementenpaar 25 ein axial wirksames Kupplungselement geschaffen ist.

Der Kupplung 12 ist eine Betätigungsvorrichtung 26 zum Lösen der Kupplung zugeordnet. Sie umfaßt ein Druckglied 27, das unter der Wirkung der Federkraft 22 steht und den Kupplungszapfen 19 seine Kupplungsstellung in die Kupplungsausnehmung drückt. Beim vorliegenden Ausführungsbeispiel ist das Druckglied 27 jedoch nicht radial sondern axial bewegbar gelagert, wobei es mit einer bezüglich der Werkzeugachse 9a schräg verlaufenden Druckfläche 28 gegen den Kupplungszapfen 19 drückt. Die Betätigungsvorrichtung 26 weist außerdem ein manuell betätigbares Betätigungselement 29 Bier in Form einer Drucktaste 31 auf, das vorzugsweise von der dem Bearbeitungswerkzeug 9 abgewandten Seite her zugänglich ist und vorzugsweise längs der Drehachse der Antriebshülse 7 hin und her verschiebbar gelagert ist. Der Zugang zur Drucktaste 31 ist durch ein Loch 32 in der dem Bearbeitungswerkzeug 9 abgewandten Wandung 33 des Gehäuses 3 zugänglich, wobei die Drucktaste 31 in ihrer werkzeugfernen Ausgangsstellung (Kupplungsstellung) etwa mit dem oberen Rand des Loches 32 abschließt oder den Rand bzw. das Gehäuse um das Maß des Bewegungshubes oder etwas mehr überragt. Zwischen der Drucktaste 31 und der Antriebshülse 7 ist eine Druckfeder 34 wirksam angeordnet, die die Drucktaste 31 in ihre werkzeugferne Ausgangsstellung vorspannt, in der die schräge Druckfläche 28 gegen den Kupplungszapfen 19 drückt und dadurch die Drucktaste 31 an einer weiteren Bewegung nach außen hindert (Kupplungsstellung).

Das Druckglied 27 und das Betätigungselement 29 können mit der Antriebshülse 7 drehbar oder undrehbar angeordnet sein.

Die Kupplung 12 ist aufgrund der elastischen Vorspannung des Kupplungszapfens 19 sowohl in Umfangsrichtung als auch axial im Sinne einer Überlastkupplung überdrückbar. D.h., durch ein Drehen des Bearbeitungswerkzeugs 9 in Umfangsrichtung oder durch ein Verschieben des Bearbeitungswerkzeugs 9 in dessen Längsrichtung läßt sich der Kupplungszapfen 19 aus der Kupplungsausnehmung 18 verdrängen und somit die Kupplung lösen, wenn die am Bearbeitungswerkzeug wirksame Dreh- oder Längskraft entsprechend groß ist.

Die erfindungsgemäße Kupplung 12 bildet somit auch einen Überlastungsschutz für das Bearbeitungswerkzeug 9, der dadurch vorgegeben ist, daß die Kupplung 12 bei Überlastung selbsttätig löst.

Zum Befestigen des Werkzeugschafts 11 beim Vorhandensein einer vorbeschriebenen Kupplung 12 in einfacher Ausgestaltung wird der Werkzeugschaft 11 in die Antriebshülse 7 eingeschoben, wobei darauf geachtet werden könnte, z.B. mit Hilfe einer vorgegebenen Markierung, daß die Kupplungsausnehmung 18 sich möglichst in der gleichen Drehposition befindet wie der Kupplungszapfen 19. Beim Einschieben kann der Werkzeugschaft 11 in einem Zuge bis in seine axiale Einschubendstellung eingeschoben werden in der die Kupplung 12 einrastet und die durch einen Anschlag begrenzt sein kann. Sofern die Stellungen der Kupplungsausnehmungen 18 und die des Kupplungszapfens 19 nicht übereinstimmen, ist der Werkzeugschaft 11 in der eingeschobenen Stellung so weit zu drehen, bis der Kupplungszapfen 19 selbsttätig in die Kupplungsausnehmung 18 einrastet.

Zum Lösen der Kupplung 12 wird die Drucktaste 31 mit einem Finger der Bedienungshand nach innen gedrückt, wobei das Druckglied 27 sich vom Kupplungszapfen 19 entfernt und dadurch der Kupplungszapfen 19 entlastet wird. Durch weiteren Fingerdruck oder durch die Kraft einer gleichzeitig wirksamen Druckfeder kann der Werkzeugschaft 11 zur Werkzeugseite hin aus dem Kupplungseingriff axial herausgeschoben werden.

Es kann von Vorteil sein, den Neigungswinkel W der Druckfläche 28 so groß zu wählen, daß die Spannung selbsthemmend ist oder daß die Kupplung 12 durch Angriff am Bearbeitungswerkzeug 9 in Umfangsrichtung oder in dessen Längsrichtung überdrückbar ist. In beiden Fällen kann das Bearbeitungswerkzeug 9 durch manuelles Drücken der Drucktaste 31 nach innen aus dem Kupplungseingriff herausgeschoben werden.

Es ist von Vorteil, mehrere Kupplungsausnehmungen 18 auf dem Umfang verteilt anzuordnen, so daß beim Einsetzen des Werkzeugschaftes 11 in die Antriebshülse 7 mehrere Kupplungsausnehmungen 18 zur Einrastung mit dem Kupplungszapfen 19 zur Verfügung stehen und deshalb die Einrastung eher gefunden wird. Dabei können eine oder mehrere auf dem Umfang verteilt angeordnete Kupplungszapfen 19 vorgesehen sein.

Bei einer solchen Ausgestaltung, wie sie beim vorliegenden Ausführungsbeispiel verwirklicht ist, ist es günstig, das Druckglied 27 an einem koaxial zur Antriebshülse 7 angeordneten, die Kupplungszapfen 19 umgebenden Ring anzuordnen, der in einer Führung, z. B. auf der Antriebshülse 7 oder im Gehäuse 3 geführt sein kann. Dabei können eine oder mehrere, auf den Umfang verteilt angeordnete Druckfedern 34 zum Vorspannen der Kupplungszapfen 19 vorgesehen sein. Vorzugsweise sind diese Druckfedern 34 zwischen der werkzeugfernen Stirnfläche 38 der Antriebshülse 11 und der Drucktaste 31 angeordnet, die vorzugsweise durch eine Radialwand des Druckringes 27a gebildet ist.

Zum vorbeschriebenen Auswerfen des Bearbeitungswerkzeugs 9 beim Entkuppeln kann ein Schubglied 39 im Bereich des werkzeugfernen Endes der Antriebshülse 7 axial verschiebbar gelagert, der mit der Drucktaste 31 in Antriebsverbindung steht und beim Drücken der Drucktaste 31 nach innen gegen das werkzeugferne Ende des Werkzeugschafts 11 gedrückt wird, so daß letzteres ausgeschoben werden kann. Es ist auch vorteilhaft, zwischen dem vorzugsweise ringförmigen Schubglied 39 und der Drucktaste 31 die Druckfeder 35 anzuordnen.

Zwischen der Antriebshülse 7 und dem gegebenenfalls ringförmigen Schubglied 39 ist vorzugsweise eine Längsführung 41 für das Schubglied 39 vorgesehen, die z.B. dadurch gebildet sein kann, daß radiale Führungsansätze 42 in entsprechende Führungs-Längsnuten 43 in der Antriebshülse einfassen und längs verschiebbar sind.

Es ist gemäß der Ausgestaltung nach Fig. 3 und 4 im weiteren vorteilhaft, in der Querebene der Kupplungsausnehmung oder Kupplungsausnehmungen 18 eine Ringnut 44 in der Mantelfläche des Werkzeugschaftes 11 vorzusehen, deren Querschnittsform dem Radius der Kugel entsprechend gerundet oder ebenfalls hohlkegelförmig sein kann. Dabei ist wesentlich, daß die wirksame Tiefe der Ringnut 44 geringer ist als die wirksame Tiefe der Kupplungsausnehmung 18, so daß das in Umfangsrichtung wirksame Kupplungselementenpaar 24 und das in Längsrichtung wirksame Kupplungselementenpaar 25 vorhanden ist.

Durch die Ringnut 44 wird eine Axialfixierung geschaffen, die dann wirksam ist, wenn der oder die Kupplungszapfen 19 nicht eingerastet sind. Hierdurch ist eine in Umfangsrichtung gerichtete Führung beim Einsetzen oder Drehen des Werkzeugschaftes 11 zwecks Findung einer Kupplungseinrastung vorgegeben.

Sofern mehrere Kupplungsausnehmungen 18 vorgesehen sind, ist es vorteilhaft, diese bezüglich Anzahl und Größe so auszuwählen, daß sie einen in Umfangsrichtung gerichteten geringen Abstand voneinander aufweisen, vorzugsweise aneinander angrenzen oder ineinander übergehen. Hierdurch wird die Findung des Kupplungseingriffs beim Einschieben des Schafts 11 sehr vereinfacht, da - wenn die Kupplungsausnehmung 18 und der Kupplungszapfen 19 sich beim Einschieben nicht bereits selbst finden - nur eine geringfügige Drehung des Schafts zum Einrasten der Kupplung 12 erforderlich ist.

Eine zusätzliche Ringnut 44 führt in jeder Drehposition der Einschubendstellung bereits zu einer vorläufigen Axialfixierung des Schaftes 11 in der Antriebshülse 7, so daß die Gefahr eines unbeabsichtigten Herausfallens des Werkzeugs 9 weitestgehend vermieden ist. Das Vorhandensein der Ringnut führt auch zu dem Vorteil, daß bei der bereits vorhandenen Axialfixierung durch Drehen des Werkzeugs 9 die Einrastung der Kupplung 12 herbeigeführt werden kann, ohne daß die Gefahr einer axialen Verschiebung des Schaftes 11 besteht.

Es ist zum Zweck der Verringerung der Flächenpressung zwischen der oder den den Kupplungszapfen 19 bildenden Kugeln und der konischen Druckfläche 28 vorteilhaft in letzterer an die Größe bzw. Form der Kugeln angepaßte Schrägrillen vorzusehen, die eine linienförmige Anlage der Kugeln in den Rillen gewährleisten.

Das in den Fig. 5, 6 und 12 dargestellte Werkzeug 9, bei dem gleiche oder vergleichbare Teile mit gleichen Bezugszeichen versehen sind, unterscheidet sich von den vorbeschriebenen Werkzeug dadurch, daß die Kupplungsausnehmungen 18 so angeordnet sind, daß die Randkanten 19a von in Umfangsrichtung benachbarten Kupplungsausnehmungen 18 ineinander übergehen und einen gemeinsamen Randkantenabschnitt 19b bilden. Dies kann durch eine entsprechende Bemessung des sich an der zylindrischen Mantelfläche 11a des Schaftes 11 in Umfangsrichtung ergebenden Durchmessers d1 der hohlkegelförmigen Kupplungsausnehmungen 18 bzw. deren Tiefe und/oder durch die Wahl einer entsprechenden Anzahl der Kupplungsausnehmungen 18 verwirklicht sein. Dabei ist es im Rahmen der Erfindung möglich, die Ausgestaltung so zu treffen, daß die Randkantenabschnitte 19b sich in der Mantelfläche 11a befinden, wie es Fig. 5 zeigt, oder die Randkantenabschnitte 19b können sich unterhalb der zylindrischen Mantelfläche 11a befinden, d.h. sie sind bezüglich der Mantelfläche 11a radial nach innen versetzt, wie es die Ausgestaltung nach Fig. 7 zeigt.

Bei der Ausgestaltung nach Fig. 5 berechnet sich

$$\frac{\text{Umfang U des Schaftes 11}}{\text{Anzahl der Kupplungsausnehmungen 18.}}$$

Dagegen ist bei der Ausgestaltung gemäß Fig. 7 ein andeutungsweise dargestellter, sich an der zylindrischen Mantelfläche 11a in Umfangsrichtung ergebender Durchmesser

$$\frac{\text{Umfang U des Schaftes 11}}{\text{Anzahl der Kupplungsausnehmungen 18.}}$$

Bei der Ausgestaltung nach Fig. 7 schneiden sich die Randkantenabschnitte 19c in einem radial nach innen gerichteten Abstand von der Mantelfläche 11a, wodurch sich nach innen konkav gerundete Randkantenabschnitte 19c ergeben, wie es Fig. 7 zeigt, wobei zu berücksichtigen ist, daß die Ansicht gemäß Fig. 7 sich aus der Blickrichtung gemäß Pfeil P in Fig. 6 ergibt, während sich die Ansicht nach Fig. 5 in der Blickrichtung gemäß Pfeil P1 in Fig. 6 ergibt. Die konkav gerundeten Randkantenabschnitte 19c ergeben auch dann eine formschlüssig wirksame und elastisch nachgiebige Halterung des Schaftes 11 (Druckpunkt), wenn der bzw. die Kupplungszapfen 19 sich auf den Randkantenabschnitten 19c befinden, z.B. nach dem Einstecken des Schaftes 11. Bei der Ausgestaltung nach Fig. 5 ist dagegen in dieser Schaft-Position nur eine kraftschlüssig wirksame Halterung aufgrund der Reibkraft der Kupplungsausnehmung(en) vorhanden.

Der Kegelwinkel w1 der Kupplungsausnehmungen 18 beträgt bei den vorliegenden Ausgestaltungen vorzugsweise etwa 120°. Die Einarbeitung der Kupplungsausnehmungen 18 in den Schaft 11 kann auf verschiedene Weise erfolgen. Sofern ein Bohrer oder Fräser (nicht dargestellt) verwendet wird, ergibt sich ein abgeflachter Ausnehmungsgrund 18d in den Kupplungsausnehmungen 18, der als kleiner Kreis d3 dargestellt ist und durch eine sogenannte Phase im mittleren Bereich des drehenden Bohrers bzw. Fräsers geformt ist.

Wie bereits bei den vorbeschriebenen Ausgestaltungen liegt das zugehörige Kupplungselement 19 an der Hohlkegelfläche 18e der zugehörigen Kupplungsausnehmung 18 an, wie es in Fig. 6 andeutungsweise dargestellt ist.

Zwischen dem Ausnehmungsgrund 18d und dem Kupplungselement bzw. Kupplungszapfen 19 besteht vorzugsweise ein Freiraum.

Im angekuppelten Zustand des Werkzeugs 9, d.h. dann, wenn die Kupplungszapfen 19 in den Kupplungsausnehmungen 18 eingerastet sind, bedarf es nach einer Betätigung der Betätigungsvorrichtung 26 zum Lösen der Kupplung 12 einer axial und/oder in Umfangsrichtung gerichteten Zug- und/oder Drehkraft am Werkzeug 9, um die Kupplungselemente bzw. -zapfen 19 aus den Kupplungsausnehmungen zu verdrängen.

Der Auslauf der Randkanten 18a in gemeinsame Randkantenabschnitte 18b ist deshalb vorteilhaft, weil sich dann, wenn beim Einstecken des Schaftes 11 die Kupplungszapfen 19 sich auf dem Randkantenabschnitt 18b befinden, ein labiler Zustand ergibt, bei damit zu rechnen ist, daß durch die Federkräfte der Kupplungszapfen 19 der Schaft 11 in eine der beiden Umfangsrichtungen verdreht wird, so daß die Kupplungszapfen 19 in die Kupplungsausnehmungen 18 einfallen können.

Wenn dagegen ein in Umfangsrichtung gerichteter Abstand zwischen den Kupplungsausnehmungen 18 besteht, ist ein solcher labiler Zustand nicht vorhanden, und deshalb bedarf es in der vorbeschriebenen Einsteckposition einer besonderen Drehung des Schaftes in Umfangsrichtung, damit die Kupplungszapfen 19 in die Kupplungsausnehmungen 18 einfallen können.

Die Kupplungsausnehmungen 18 befinden sich vorzugsweise im freien Endbereich des Schaftes 11, wie es die Figuren zeigen.

Bei einem bevorzugten Ausführungsbeispiel, bei der der Schaftdurchmesser 2,5 mm beträgt, beträgt der Durchmesser der Kugeln vorzugsweise etwa 1,15 mm und es sind acht Stück Kupplungsausnehmungen 18 und Kupplungszapfen 19 vorhanden. Dabei ist der Abstand 11b zwischen dem freien Ende des Schaftes 11 und den Kupplungsausnehmungen 18 vorzugsweise etwas größer bemessen als der halbe Durchmesser dl. Vorzugsweise ist der Abstand 11b nicht größer bemessen als etwa 3 mm, vorzugsweise etwa 1 mm oder weniger als 1 mm.

Die Ausgestaltung des Handstücks 2 nach Fig. 8 bis 9, bei der gleiche oder vergleichbare Teile mit gleichen Bezugszeichen versehen sind, unterscheidet sich von der vorbeschriebenen Ausgestaltung durch folgende Einzelheiten.

Bei der Ausgestaltung gemäß Fig. 2 dreht das vom Druckglied 27 und den Betätigungselementen 29 bzw. der Drucktaste 31 gebildete gemeinsame Bauteil mit der Antriebshülse 7. Es ist zwar möglich, die Drucktaste 31 z.B. während einer auslaufenden Rotation zu betätigen, jedoch kann dies als unangenehm empfunden werden. Bei der Ausgestaltung nach Fig. 8 bis 9 ist deshalb das Betätigungselement 29 und die Drucktaste 31 jeweils ein passives Element, wobei darüber ein manuell betätigbares aktives Betätigungselement 29a, hier in Form einer Drucktaste 31a, angeordnet und längs der Mittelachse 9a im Gehäuse 3 oder in ein in das Gehäuse eingeschraubtes Deckelteil 3a in einer Führung 45 geführt. Hierzu dient eine Bohrung 46 in der Wandung 33 des Gehäuses 3 oder im Deckelteil 3a, wobei das aktive Betätigungselement 29a bzw. die Drucktaste 31a an die Abmessung dieser Bohrung 46 mit Bewegungsspiel angepaßt ist. Mittels einer Druckfeder 47, deren unteres Ende an einem das obere Lager 13 begrenzenden Sicherungsring 48 abgestützt ist, ist die aktive Drucktaste 31a in ihre obere Ausgangsstellung vorgespannt, in der sie bei vorzugsweise hutförmiger Bauform (siehe Fig. 8 bis 9) mit einem äußeren Ringansatz am freien Rand der aktiven Drucktaste 31 an einer Innenschulterfläche 51 der Bohrung 46 anliegt, die durch eine Verjüngung in deren oberen Randbereich gebildet ist. Bei dieser Ausgangsstellung besteht zwischen der Radialwand 31b der Drucktaste 31a und dem passiven Betätigungselement 29 bzw. der passiven Drucktaste 31 ein geringer Abstand, wobei die passive Drucktaste 31 in ihrem Zentrum ein Loch 52 aufweisen kann.

Bei der Ausgestaltung gemäß Fig. 8 bis 9 ist nur eine Druckfeder 34 zur Beaufschlagung des Druckglieds 27 bzw. des passiven Betätigungselements 29 vorgesehen, die zwecks Verringerung der Bauhöhe eine Spiralkegelform aufweisen kann. Bei dieser Ausgestaltung ist das aktive Betätigungselement 29a bzw. die aktive Drucktaste 31a von den drehenden Bauteilen getrennt angeordnet, so daß es auch während einer Rotation bzw. eines Rotationsauslaufs zur Lösung bzw. Freigabe des Werkzeugs 9 betätigbar ist.

Die Vorspannkraft und die selbsthemmende Wirkung, mit der der Druckring 27 den oder die Kupplungszapfen 19 radial einwärts vorspannt, ist nicht nur vom Neigungswinkel W der Schräg- bzw. Kegelfläche 28 des Druckglieds 27 abhängig, sondern alternativ vom Innendurchmesser d des Druckrings 27. Wenn dieser Innendurchmesser d nur geringfügig kleiner ist als ein gedachter Kreis, der die Kugeln in ihrer Kupplungsstellung umgibt, wie es die Fig. 3 und 7 zeigen, dann wirkt die in diesem Bereich vorhandene Krümmung der Kugeln im Sinne einer gering geneigten Schrägfläche. Dabei wird zum einen eine große radial einwärts gerichtete Vorspannkraft erzeugt, und zum anderen ist diese Kupplung selbsthemmend, d.h., es ist nicht möglich, durch eine Längsverschiebung des Werkzeugs das oder die Kupplungszapfen 19 bzw. Kugeln radial nach außen zu drücken und den Druckring 27 nach unten zu ziehen. D.h., bei einer solchen Ausgestaltung ist keine Überlastkupplung vorhanden, die bei einer Überlastung des Werkzeugs 9 in Umfangsrichtung oder in dessen Axialrichtung selbsttätig öffnet.

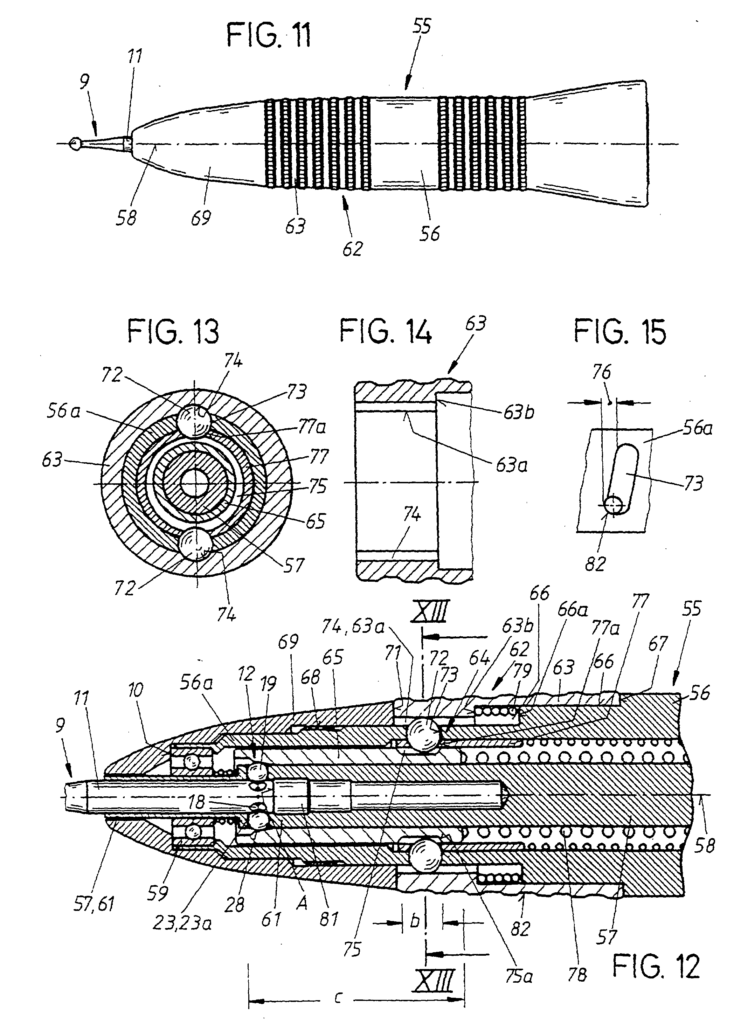

Bei der Ausgestaltung gemäß Fig. 11 bis 15 ist die Erfindung an einem Behandlungsinstrument in Form eines sich gerade erstreckenden Handstücks 55 verwirklicht. Ein solches Behandlungsinstrument wird insbesondere für zahnärztliche Behandlungen außerhalb des Mundraums und zur Bearbeitung von Zahnmodellen und Zahnteilen an sogenannten Technik-Arbeitsplätzen benutzt.

Die Hauptteile dieses Handstücks 55 sind ein hülsenförmiges Gehäuse 56, in dem eine Antriebswelle 57 etwa koaxial angeordnet und um die Längsmittelachse 58 mittels Lager 59 gelagert ist, von denen in Fig. 12 nur das vordere Lager als Wälzlager dargestellt ist. Der vordere Bereich der Antriebswelle 57 ist vorzugsweise einteilig als Antriebshülse 61 für das von vorne in die Antriebshülse 61 einsteckbare Werkzeug 9 ausgebildet, wobei das vordere Lager 59 auf der ggf. teilweise verjüngten Antriebshülse 61 sitzt. Zwischen dem Werkzeugschaft 11 und der Antriebshülse 61 ist zur lösbaren Einspannung des Werkzeugschaftes 11 eine lösbare Kupplung zur Drehmitnahmeverbindung und zur axialen Verbindung des Werkzeugschaftes 11 in der Antriebshülse 61 vorgesehen, die prinzipiell der vorbeschriebenen Kupplung 12 entspricht und deshalb auch mit dem gleichen Bezugszeichen versehen ist. Bei dem Handstück 55 ist eine andere Betätigungsvorrichtung 62 zum Lösen der Kupplung 12 vorgesehen. Die Betätigungsvorrichtung 62 weist eine am Umfang des Gehäuses 56 in einem Abstand von dessen vorderen Ende angeordnete Drehhülse 63 auf, die durch ein Getriebe 64 mit einem Druckglied 65 verbunden ist, das mit einer Schräg- bzw. Kegelfläche 28, Kupplungszapfen 19, Führungslöchern 23 bzw. 23a und Kupplungsausnehmungen 18 in prinzipiell mit dem vorbeschriebenen Ausführungsbeispiel vergleichbarer Weise gegen die Kupplungszapfen 19 wirkt und deshalb diesbezüglich zwecks Vermeidung doppelter Beschreibung nicht näher beschrieben wird.

Die Drehhülse 63 ist in einer nach vorne in Stufen verjüngten Ringausnehmung 66 zwischen der hinteren Begrenzungsfläche 67 der Ringausnehmung 66 und einer von vorne auf den vorderen verjüngten Abschnitt des Gehäuses 56 mittels eines Gewindes 68 aufschraubbaren Kappe 69 angeordnet, deren Rückfläche die Ringausnehmung 66 als vordere Begrenzungsfläche 71 begrenzt. Die Anordnung ist so getroffen, daß bei Anlage der Kappe 69 an einer Schulter 72 des verjüngten Gehäuseteils 56a die Drehhülse 63 mit Bewegungsspiel zwischen den Begrenzungsflächen 67, 71 gelagert ist. Die Kappe 69 ist zu ihrem vorderen Ende hin kegelförmig verjüngt.

Das Getriebe 64 wandelt eine Drehbewegung der Drehhülse 63 in eine axiale Bewegung des Druckgliedes 65 um, und weist eine oder mehrere auf einem Teilkreis verteilt angeordnete, hier zwei Getriebezapfen oder vorzugsweise -kugeln 72 auf, die jeweils in einer in Umfangsrichtung schräg verlaufenden Führungsnut 73 im verjüngten Gehäusekörper 56a angeordnet sind, wobei der Durchmesser der Getriebekugeln 72 größer bemessen ist als die Wanddicke des hülsenförmigen Gehäusekörpers 56a. Die Getriebkugel 72 überragt somit die Wandung des Gehäusekörpers 56a innen und außen, wobei in der Innenmantelfläche der Drehhülse 63 eine Längsnut 74 und in der Außenmantelfläche des hülsenförmigen Druckgliedes 65 eine Umfangsnut 75 zur Aufnahme der überragenden Kugelabschnitte angeordnet sind. Die Längsnut 74 erstreckt sich vorzugsweise durchgehend durch einen inneren Ringansatz 63a und ist länger bemessen als das axiale Versatzmaß 76 der schrägen Führungsnut 73. Die Breite b der Umfangsnut 75 ist größer bemessen als die zugehörige Kugelabmessung, wobei in der in Fig. 12 dargestellten Kupplungsstellung die hintere Begrenzungsfläche 75a der Umfangsnut 75 einen kleinen Abstand von der oder den Kupplungskugeln 72 aufweist.

Da das hülsenförmige Druckglied 65 mit der Antriebsachse 57 eine drehbare Einheit bildet, sollte verhindert werden, daß die Getriebekugeln 72 im Kupplungszustand Kontakt mit dem Druckglied 65 erhalten. Hierzu könnte die Führungsnut 73 im Bereich ihrer unteren Ränder verjüngt sein, wie es bei den Führungsbohrungen 23 des vorbeschriebenen Ausführungsbeispiels beschrieben worden ist, damit ein Eintauchen der Getriebekugeln 72 gegen das Druckglied 65 verhindert ist. Vorzugsweise ist im Bereich der Führungsnut 73 in dem Gehäusekörper 56a eine Abstandshülse 77 fest eingesetzt oder gehalten, die eine mit der Führungsnut 73 kongruente Führungsnut 77a aufweist, die jedoch in ihrer Breite etwas verjüngt ist, so daß die Getriebekugel 72 nicht radial eintauchen können und einen Abstand vom Druckglied 65 aufweisen.

Im folgenden wird die Funktion der Betätigungsvorrichtung 62 beschrieben. In der in Fig. 12 dargestellten Kupplungsstellung der Kupplung 12 wird das hülsenförmige Druckglied 65, dessen Länge c so lang bemessen ist, daß sein hinterer Endbereich bis in den Bereich der Drehhülse 63 ragt, durch eine Druckfeder 78 gegen die Kupplungskugeln 19 vorgespannt, so daß letztere radial einwärts in die Kupplungsausnehmungen 18 gedrückt sind. Zum Entkuppeln ist die Drehhülse 63 relativ zum Gehäuse 56 zu verdrehen, und zwar gegen eine Federkraft, die durch eine Drehfeder 79 aufgebracht wird, die vorzugsweise durch eine Wendelfeder gebildet ist, die zwischen der Rückfläche 63b des Ringansatzes 63a und der Stufenfläche 66a der Ringausnehmung 66 angeordnet ist und an ihrem einen Ende mit der Drehhülse 63 und an ihrem anderen Ende mit dem Gehäusekörper 56a verbunden ist, z.B. mittels abgewinkelten Enden, die in zugehörige Löcher eingehakt sind.

Bei der Relativverdrehung zwischen Drehhülse 63 und dem Gehäuse 56 werden die Getriebekugeln 72 mitgedreht, wobei sie aufgrund des schrägen Verlaufs der Führungsnuten 73 zugleich axial nach hinten wandern, gegen die Begrenzungsflächen 75a der Umfangsnut 75 drücken und dabei das hülsenförmige Druckglied 65 gegen die Kraft der Druckfeder 78 nach hinten verschieben, so daß die Kupplungskugeln 18 durch ein Herausziehen des Werkzeugs 9 nach außen verdrängt werden können, wobei die Kupplung 12 gelöst wird.

Aufgrund der Spannung der Drehfeder 78 wird die Drehhülse 63 nach ihrem Loslassen selbsttätig in ihrer Ausgangsstellung rückverstellt und zugleich auch das Druckglied 65 durch die Druckfeder 78 in die Kupplungsstellung vorgeschoben. Zum Einsetzen des Werkzeugs 9 in die Antriebshülse 61 ist es bei einer entsprechend großen Neigung der Schrägfläche bzw. Hohlkegelfläche des Druckglieds 65 möglich, durch das Verdrängen radial nach außen der Kupplungskugeln 19 beim Einschieben des Werkzeugschaftes 11 das hülsenförmige Druckglied 65 gegen die Kraft der Druckfeder 78 nach hinten zu verschieben, so daß der Werkzeugschaft 11 weiter zwischen die Kupplungskugeln 19 geschoben werden kann und dann, wenn die Kupplungskugeln in den Bereich der Kupplungsausnehmungen 18 gelangen, die Kupplung 12 aufgrund der Kraft der Druckfeder 78 selbsttätig schließt und die Kupplungskugeln in die Kupplungsausnehmungen 18 gegen den Werkzeugschaft 11 einrasten.

Bei einem entsprechend großen Neigungswinkel W bildet auch diese Kupplung 12 eine axial und/oder in Umfangsrichtung wirksame Überlastkupplung 70, die bei Überlastung des Werkzeugs in Umfangsrichtung und/oder Axialrichtung selbsttätig löst.

Ist dagegen die Neigung der Schräg- bzw. Hohlkegelfläche geringer, dann ist es erforderlich, das hülsenförmige Druckglied 65 durch ein Verdrehen der Drehhülse 63 in ihre rückverstellte Entkupplungsstellung zu verschieben, in dieser Stellung den Werkzeugschaft einzuführen und dann die Drehhülse 63 loszulassen, wonach sie aufgrund der Federkräfte selbsttätig in ihre Ausgangsstellung zurückgestellt wird oder die Drehhülse in ihre Ausgangsstellung rückzudrehen, wobei die Kupplung 12 selbsttätig schließt.

Die erfindungsgemäße Ausgestaltung mit mehreren Kupplungsausnehmungen 18 bildet auch eine Drehposition-Einstellvorrichtung 80 für das Werkzeug 9, die die Einstellung bestimmter Drehpositionen-Ausgangsstellungen ermöglicht und z.B. dann von Bedeutung ist, wenn ein langsam drehender Antrieb vorgesehen ist, wie es z.B. bei einem Schraubendreherantrieb für den Fall vorgesehen ist, daß das Werkzeug ein Schraubendreher ist

Um zu gewährleisten, daß in der eingeschobenen Stellung des Werkzeugschafts 11 die Kupplungsausnehmung 18 den Kupplungskugeln 19 gegenüberliegen, ist es vorteilhaft, in der Antriebshülse 61 einen Anschlag für das freie Ende des Werkzeugschafts 11 vorzusehen, der diese Stellung bestimmt. Ein solcher Anschlag A kann z.B. durch einen in die Betriebshülse 61 fest eingesetzten Stopfenkörper 81 gebildet sein.

Zur Schaffung von Druckpunkten oder Raststellen, in denen die Drehhülse 63 jeweils verharrt, können am Anfang und/oder Ende der Führungsnut 73 seitliche Einrastausnehmungen 82 vorgesehen sein, in die die Getriebekugeln 72 aufgrund der Spannung der Druckfeder 78 einrasten.

Zur Erhöhung der Griffestigkeit ist es vorteilhaft, auf der Außenmantelfläche der Drehhülse 63 eine Riffelung oder Griffnuten 82 anzuordnen.

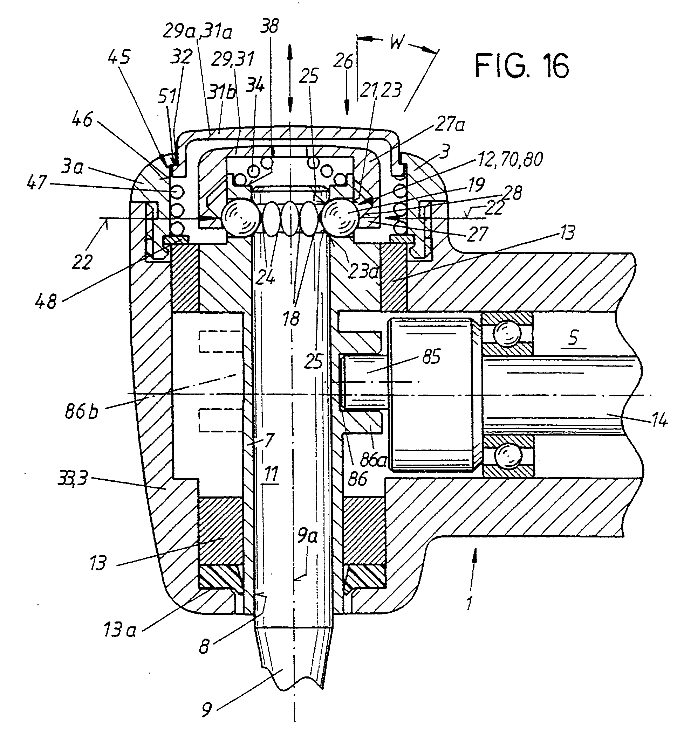

Das Ausführungsbeispiel gemäß Fig. 16, bei dem gleiche oder vergleichbare Teile mit gleichen Bezugszeichen versehen sind, zeigt ein Behandlungsinstrument 1 mit einem sogenannten Winkelkopf, wobei das Werkzeug 9 durch den Antrieb in seiner Längsrichtung hin und her verschiebbar und ggf. auch drehbar oder schwenkbar angetrieben ist. Eine solche Ausgestaltung eignet sich für ein in seiner Längsrichtung bewegbares Werkzeug, z.B. eine Feile oder ein Wurzelkanal-Behandlungswerkzeug, die an sich bekannt sind.

Bei dieser Ausgestaltung ist die Antriebshülse 7 zu beiden Seiten der Antriebswelle 14 ebenfalls in Lagern 13 längsverschieblich gelagert, wobei es sich um Gleitlager handeln kann. An der werkzeugnahen Seite des zugehörigen Lagers 13 ist ein Dichtungsring 13a, vorzugsweise mit einer Dichtungslippe, als Abstreifring vorgesehen, der zwischen dem Gehäuse 3 und der Antriebshülse 7 wirksam ist. Die Antriebswelle 14 ist durch ein Getriebe, insbesondere einen Exzenterantrieb mit der Antriebshülse 7 verbunden, der die Drehbewegung der Antriebswelle 14 in eine Längsbewegung der Antriebshülse 7 umwandelt. Hierzu ist ein exzentrischer Antriebszapfen 85 an der Antriebswelle 14 vorgesehen, der in eine Ausnehmung 86 an der Antriebshülse 7 mit einem Bewegungsspiel so einfaßt, daß die Antriebshülse 7 im Sinne einer längsgerichteten Hin- und Herbewegung angetrieben wird, wenn die Antriebswelle 14 dreht. Die Ausnehmung 86 kann unmittelbar in der Antriebshülse 7 oder in einem seitlichen Ansatz 86a der Antriebshülse 7 angeordnet sein.Wenn die Ausnehmung 86 in der Drehebene des Antriebszapfens 85 allseitig geschlossen ist, führt die Antriebshülse 7 gleichzeitig mit ihrer Hin- und Herbewegung eine Schwenkbewegung um ihre Mittelachse 9a aus. Wenn dagegen die Ausnehmung 86 im Sinne einer Umfangsnut 86b z. B. in einem Ringansatz ausgebildet ist, was vereinfacht andeutungsweise gestrichelt dargestellt ist, ist die Antriebshülse 7 während ihres Antriebs um ihre Mittelachse 9a frei drehbar, so daß sie bezüglich einer bestimmten Drehposition nicht festgelegt ist. Bei einer solchen Ausgestaltung kann mit dem Werkzeug 9 kaum ein Drehmoment oder nur ein geringes Drehmoment auf den Behandlungsort ausgeübt werden.

Auch bei dieser Ausgestaltung bildet die Kupplung 12 eine vorteilhafte Verbindung, die in Umfangsrichtung und/oder in Längsrichtung des Werkzeugs wirksam ist, und/oder eine Dreh- oder Winkelposition-Einstellvorrichtung 80 und/oder eine in Längsrichtung und/oder in Umfangsrichtung des Werkzeugs 9 wirksame Überlastkupplung 70.

Die Überlastkupplung 70 ist insbesondere dann von Bedeutung, wenn die Querschnittsform des Werkzeugs unrund, wie es insbesondere bei einer Flachfeile länglicher Querschnittsform oder eine Flachfeile der Fall ist. In einem solchen Fall kann mit dem Werkzeug ein Drehmoment auf einen Zahn (z.B. in einer Zahnlücke) ausgeübt werden, mit dem der Zahn überbelastet werden könnte. Dies wird durch die Überlastkupplung verhindert, da diese die Übertragung eines schädlichen Drehmoments verhindert.

Die Größe der jeweiligen Kupplungskräfte kann bei allen Ausführungsbeispielen durch eine vorbestimmte Spannung der Feder 34 bzw. 78 vorbestimmt werden.

Die erfindungsgemäße Werkzeug-Spannvorrichtung bzw. lösbare Kupplungsvorrichtung mit wenigstens einer Kupplungsausnehmung 18 im Werkzeugschaft eignet sich sowohl für kleine Bauweisen, insbesondere für zahnärztliche Behandlungsinstrumente, als auch für leistungsfähige Bearbeitungsinstrumente größerer Bauweise, insbesondere für Bearbeitungs-Handstücke von medizinischen oder dentalen Labors, wobei eine sichere Werkzeugeinspannung und die Übertragung größerer Drehmomente gewährleistet sind. Dabei eignet sie sich bei einem zahnärztlichen Behandlungsinstrument für Werkzeugschaft-Durchmesser von etwa 1,5 mm bis etwa 3 mm, insbesondere für die in zahnärztlichen Praxen üblichen Durchmesser 1,6 mm und 2,35 mm.

Die erfindungsgemäßen Ausgestaltungen eignen sich sowohl für Werkzeuge 9 aus Metall, insbesondere Stahl, als auch Kunststoff, wobei es sich um ein Drehwerkzeug oder um ein axial hin und her verschiebbares Werkzeug handeln kann.

Im folgenden werden noch weitere, durch die Erfindung erzielbaren Vorteile beschrieben.

Der Spannvorgang ist sowohl bei winkeligen als auch geraden Instrumenten handhabungsfreundlich, komfortabel, leichtgängig und gleichzeitig sicher.

Die Werkzeugspannung ermöglicht eine große Haltekraft und ist robust genug, um höhere Drehmomente zu übertragen, wenn dies die Instrumente für Spezialfälle erfordern.

Besserer Rundlauf und geringeres Radialspiel des Werkzeugs.

Spielfreie Axialfixierung des Werkzeugs im Instrument bzw. Handstück.

Einsetzen des Werkzeugs ohne auf eine bestimmte Winkelstellung achten zu müssen.

Selbsttätige Findung der Mitnahmeraststellung beim Einsetzen des Werkzeugs.

Es ist eine Einhand-Bedienung beim Vorhandensein eines entsprechenden Bohrerständers möglich.

Es genügt eine Druckfeder verhältnismäßig geringer Federkraft im Instrument bzw. Handstück, was von Vorteil für die Laufgüte ist.

Unempfindlichkeit der Kupplungs- bzw. Spannvorrichtung gegenüber der Behandlung in einem Desinfektor, insbesondere Thermodesinfektor.

Es wird nur eine Werkzeugschaftausgestaltung für gerade und winkelförmige Handstücke bzw. Instrumente ermöglicht.

Ein Anschlag A für das Werkzeug 9 gemäß Fig. 12 kann auch bei allen übrigen Ausgestaltungen nach Fig. 1 bis 10 und 16 vorgesehen sein. Da ein Anschlag A die Einsteckbewegung begrenzt, kann er die werkzeugseitigen Flankenabschnitte 18e oder Kanten der wenigstens einen Kupplungsausnehmung 18 erübrigen.

Beim Vorhandensein der werkzeugseitigen Flankenabschnitte 18e oder Kanten ist es vorteilhaft, in der (eingerasteten) Kupplungsstellung einen kleinen Abstand zwischen dem Anschlag A und dem Werkzeugschaft 11 vorzusehen, so daß beim Einstecken des Schaftes 11 der Anschlag A ein Einstecken weit über die Kupplungsstellung hinaus verhindert und eine grobe Kupplungsstellung vorgibt und eine Zentrierung in der Kupplungsstellung aufgrund der Federkraft selbsttätig erfolgt.

Sofern die Kupplung 12 eine axial wirksame Überlastkupplung bildet, ist allerdings zu bemerken, daß der Anschlag A die Wirksamkeit der Überlastkupplung in der einen axialen Richtung, nämlich in seiner axialen Richtung aufhebt.

**Patentansprüche**

1. Werkzeug (9) für ein Handstück, mit einem vorzugsweise runden Schaft (11), mit dem es in eine Antriebshülse (7) des Handstücks einsetzbar, kuppelbar und spannbar ist, wobei am Umfang des Schaftes (11) eine oder mehrere einander gleiche Kupplungsausnehmungen (18) vorgesehen ist bzw. sind, und in Umfangsrichtung verteilt angeordnet sind, **dadurch gekennzeichnet, daß** die Kupplungsausnehmung(en) eine hohlkegelförmige Querschnittsform aufweist bzw. aufweisen.

2. Werkzeug nach Anspruch 1, **dadurch gekennzeichnet,** **daß** die Kupplungsausnehmungen (18) in Umfangsrichtung gleichmäßig verteilt angeordnet sind.

3. Werkzeug nach Anspruch 1 oder 2, **dadurch gekennzeichnet,** **daß** die Kupplungsausnehmung (18) oder Kupplungsausnehmungen (18) in einer Ringnut (44) angeordnet ist bzw. sind, wobei die wirksame Tiefe der Kupplungsausnehmung bzw. Kupplungsausnehmungen (18) tiefer bemessen ist bzw. sind als die wirksame Tiefe der Ringnut (44).

4. Werkzeug nach einem der vorherigen Ansprüche, **dadurch gekennzeichnet,** **daß** die Kupplungsausnehmung (18) oder die Kupplungsausnehmungen (18) und das freie Ende des Schaftes (11) durch gerundete und/oder abgeschrägte Flächen so ausgestaltet ist bzw. sind, daß beim Einschieben bzw. beim Herausziehen des Schaftes (11) in die bzw. aus der Antriebshülse (7) ein bzw. mehrere Kupplungszapfen (19) des Handstücks aus der Kupplungsstellung verdrängt wird bzw. werden.

5. Werkzeug nach einem oder mehreren der vorherigen Ansprüche, **dadurch gekennzeichnet,** **daß** die Kupplungsausnehmung (18) oder die Kupplungsausnehmungen (18) eine rechtwinklige oder stumpfwinklige Querschnittsform aufweist bzw. aufweisen.

6. Werkzeug nach Anspruch 5, **dadurch gekennzeichnet,** **daß** der Kegelwinkel (w1) etwa 105° bis 135° oder etwa 120° beträgt.

7. Werkzeug nach einem der vorherigen Ansprüche, **dadurch gekennzeichnet,** **daß** die Randkanten (18a) voneinander in Umfangsrichtung benachbarten Kupplungsausnehmungen (18) einen Abstand voneinander aufweisen oder mit gemeinsamen Randkantenabschnitten (18b) ineinander übergehen.

8.  Werkzeug nach einem der vorherigen Ansprüche, **dadurch gekennzeichnet,** **daß** acht Stück Kupplungsausnehmungen (18) vorgesehen sind.

9.  Werkzeug nach einem oder mehreren der vorherigen Ansprüche, **dadurch gekennzeichnet,** **daß** zumindest der Schaft (11) des Werkzeugs aus Metall oder Stahl oder Kunststoff besteht.

## Claims

1.  A tool (9) for a handpiece having a preferably round shaft (11) with which it can be inserted, coupled and held in a drive sleeve (7) of the handpiece, there being provided on the circumference of the shaft (11) and arranged distributed in the circumferential direction one or more like coupling recesses (18) , **characterised in that**, the coupling recess(es) (18) has or have a hollow conical shaped cross-sectional form.

2.  A tool according to claim 1, **characterised in that**, the coupling recesses (18) are arranged evenly distributed in the circumferential direction.

3.  A tool according to claim 1 or 2, **characterised in that**, the coupling recess (18) or coupling recesses (18) is or are arranged in the ring groove (44), the effective depth or depths of the coupling recess or coupling recesses (18) being deeper than the effective depth of the ring groove (44).

4.  A tool according to any preceding claim, **characterised in that**, the coupling recess (18) or the coupling recesses (18) and the free end of the shaft (11) is or are so configured by rounded and/or chamfered surfaces that upon insertion or upon removal of the shaft (11) into or out of the drive sleeve (7) one or more coupling pins (19) is or are displaced out of the coupling position.

5.  A tool according to one or more of the preceding claims, **characterised in that**, the coupling recess (18) or the coupling recesses (18) has or have a right angled or obtuse angled cross-sectional form

6.  A tool according to claim 5, **characterised in that**, the conical angle (w1) is about 105° to 135°, or about 120°.

7.  A tool according to any preceding claim, **characterised in that**, the peripheral edges (18a) of coupling recesses (18) neighbouring each other in the circumferential direction have a spacing from one another or merge into one another with common peripheral edge sections (18b).

8.  A tool according to any preceding claim, **characterised in that**, eight coupling recesses (18) are provided.

9.  A tool according to one or more of the preceding claims, **characterised in that**, at least the shaft (11) of the tool is of metal or steel or plastics.

## Revendications

1.  Outil (9) pour une pièce à main, comportant une tige (11), de préférence ronde, par laquelle il peut être inséré, couplé et serré dans un manchon d'entraînement (7) prévu dans la pièce à main, un ou plusieurs évidement(s) d'accouplement (18) identiques étant prévu(s) sur le pourtour de la tige (11) et étant réparti(s) sur la périphérie, **caractérisé en ce que** l'évidement ou les évidement(s) d'accouplement, en section transversale, a/ont une forme de cône évidé.

2.  Outil selon la revendication 1, **caractérisé en ce que** les évidements d'accouplement (18) sont régulièrement répartis dans la direction périphérique.

3.  Outil selon la revendication 1 ou 2, **caractérisé en ce que** l'évidement d'accouplement (18) ou les évidements d'accouplement (18) est/sont disposé(s) dans une gorge annulaire (44), la profondeur effective de l'évidement d'accouplement (18) ou des évidements d'accouplement (18) étant supérieure à la profondeur effective de la gorge annulaire (44).

4.  Outil selon une des revendications précédentes, **caractérisé en ce que** l'évidement d'accouplement (18) ou les évidements d'accouplement (18) et l'extrémité libre de la tige (11) comportent des surfaces arrondies et/ou chanfreinées de telle sorte que lors de l'insertion ou de l'extraction de la tige (11) dans ou hors du manchon d'entraînement (7), un ou plusieurs tétons d'accouplement (19) de la pièce à main soient repoussés hors de la position d'accouplement.

5. Outil selon une ou plusieurs des revendications précédentes, **caractérisé en ce que** l'évidement d'accouplement (18) ou les évidements d'accouplement (18), en section transversale, ont une forme d'angle ou d'angle obtus.

6. Outil selon la revendication 5, **caractérisé en ce que** l'angle de cône (w1) est d'environ 105° à 135°, ou d'environ 120°.

7. Outil selon une ou plusieurs des revendications précédentes, **caractérisé en ce que** les bords (18a) d'évidements d'accouplement (18) voisins dans la direction périphérique sont mutuellement espacés ou se raccordent les uns aux autres par des portions de bord (18b) communes.

8. Outil selon une ou plusieurs des revendications précédentes, **caractérisé en ce qu'**il est prévu huit évidements d'accouplement (18).

9. Outil selon une ou plusieurs des revendications précédentes, **caractérisé en ce qu'**au moins la tige (11) de l'outil est en métal ou en acier ou en matière plastique.

# FIG. 1

# FIG. 2

FIG. 3

FIG. 4

# FIG. 7

# FIG. 5

# FIG. 6

FIG. 8

FIG. 9

FIG. 10

FIG. 11

FIG. 13

FIG. 14

FIG. 15

FIG. 12

EP 0 925 762 B1

FIG. 16